# EUROPEAN PATENT APPLICATION

(11) **EP 4 668 602 A1**
(43) Date of publication of application: **24.12.2025**
(21) Application number: 24755994.1
(22) Date of filing: 31.01.2024
(51) Int. Cl.: H04B 7/06, H04W 24/02, H04W 72/04

(54) **INFORMATION PROCESSING METHOD, RELATED DEVICE, AND STORAGE MEDIUM**

(30) Priority: 16.02.2023 CN 202310149617
(71) Applicant: Datang Mobile Communications Equipment Co., Ltd., Beijing 100085 (CN)
(72) Inventor: HUANG, Qiuping, Beijing 100085 (CN); SU, Yuwan, Beijing 100085 (CN); GAO, Qiubin, Beijing 100085 (CN); FEI, Yongqiang, Beijing 100085 (CN); WANG, Da, Beijing 100085 (CN)
(74) Representative: dompatent
(86) International application number: PCT/CN2024/074929
(87) International publication number: WO 2024/169620

(57) **Abstract**

Information processing methods, devices and storage medium are provided. The method includes: receiving a first signaling transmitted from a second communication device; transmitting monitoring assistant information for a first object based on the first signaling; wherein, the first object includes one or more of following: a model; a Channel state information CSI determination method; a CSI feedback method; a positioning method; a beam management method.

## Description

The present disclosure claims the priority from a Chinese patent application No. 202310149617.9 filed on February 16, 2023 before CNIPA, entitled "INFORMATION PROCESSING METHOD AND DEVICE AND STORAGE MEDIUM", the disclosure of which is incorporated herein in its entirety.

### TECHNICAL FIELD

The present disclosure relates to the field of communications technology, and in particular, relates to an information processing method, an information processing device, and a storage medium.

### BACKGROUND

In a New Radio (NR) system, a DL (Downlink) Type II codebook can have better CSI (Channel State Information) feedback accuracy. However, a feedback overhead of the DL Type II codebook is relatively large. In the related art, CSI compression feedback is performed based on AI (Artificial Intelligence)/ML (Machine Learning) models, thereby greatly reducing the feedback overhead of CSI under same CSI feedback accuracy, or improving the CSI feedback accuracy under same CSI feedback overhead. However, since AI/ML algorithms are usually obtained based on data training, and wireless communication systems are complex and dynamic, there is no guarantee that AI/ML-based CSI compression feedback algorithms will always have better performance. If the AI-based CSI compression feedback algorithm is not suitable for current channel conditions, but the terminal still performs CSI compression and feedback based on the algorithms, then a base station will obtain incorrect CSI information, performance of downlink transmission is affected. In order to solve this problem, a performance monitoring issue of AI/ML models needs to be considered for model activation, deactivation, selection, switching, rollback and update, etc., so that a CSI feedback/acquisition method can be updated according to changes of situations. However, no specific feasible solution has been discussed regarding model monitoring in the related art. In addition, the related art has not yet discussed specific and feasible solutions for monitoring of CSI determination methods, CSI feedback methods, positioning methods, and beam management methods.

### SUMMARY

Embodiments of the present disclosure provide an information processing method, related devices and a storage medium, to solve the problem that there is no specific solution for monitoring a model monitoring, monitoring a CSI determination method, monitoring a CSI feedback method, monitoring a positioning method, and monitoring a beam management method in the related art.

An information processing method provided in the embodiments of the present disclosure includes: receiving a first signaling transmitted from a second communication device; transmitting monitoring assistant information for a first object based on the first signaling; wherein, the first object includes one or more of following: a model; a Channel state information (CSI) determination method; a CSI feedback method; a positioning method; a beam management method.

Optionally, the first signaling includes one or more of following indication information:
information instructing the first communication device to transmit or determine the monitoring assistant information for the first object;
information indicating an identifier ID related to the first object;
information indicating a reference signal resource corresponding to the monitoring assistant information for the first object;
information indicating time corresponding to the monitoring assistant information for the first object;
information instructing the first communication device to determine a time domain resource of the monitoring assistant information for the first object;
information instructing the first communication device to determine time-frequency resources of the monitoring assistant information for the first object;
information instructing the first communication device to determine a period of the monitoring assistant information for the first object;
information indicating a transmission occasion in which the first communication device transmits the monitoring assistant information for the first object;
information instructing a time domain resource used by the first communication device to transmit the monitoring assistant information for the first object;
information indicating a period in which the first communication device transmits the monitoring assistant information for the first object;
information indicating a transmission position and/or a channel corresponding to the monitoring assistant information for the first object;
information instructing the first communication device to transmit a CSI report corresponding to the monitoring assistant information for the first object;
information instructing the first communication device to transmit CSI used for monitoring the first object;
information indicating CSI-report related information;
information indicating a determination method and/or a feedback method of CSI used for monitoring the first object;
information indicating content and/or format included in the monitoring assistant information for the first object;
information indicating an activated model.

Optionally, the information related to the CSI report includes one or more of following: content included in the CSI report; a format of the CSI report; a feedback method of the CSI included in the CSI report.

Optionally, the information indicating the ID includes one or more of the following: a model ID; a functionality ID; a scenario type; wherein the functionality ID is configured to indicate an ID of one or more of following functionalities: CSI compression feedback; CSI prediction; positioning; beam management; resource scheduling.

Optionally, information of the time includes one or more of following: time information of determining the monitoring assistant information for the first object; time information of monitoring the reference signal corresponding to the monitoring assistant information for the first object.

Optionally, the information of the time further includes one or more of following: starting time of the monitoring assistant information for the first object; ending time of the monitoring assistant information for the first object; a duration of the monitoring assistant information for the first object; effective time of the first signaling.

Optionally, the monitoring assistant information includes one or more of following: identifier (ID) information; channel state information (CSI); one or more measurement metrics; information used to indicate a first performance metric.

Optionally, the ID information includes one or more of the following: a model ID; a functionality ID; a scenario type.

Optionally, the CSI includes one or more of following: CSI corresponding to at least one model; non-model-based CSI; precoding matrix information; rank information; channel quality indicator (CQI).

Optionally, the first performance metric includes one or more of following: a performance metric corresponding to the first object; an accuracy index; a system performance metric; an index corresponding to distribution; a performance metric of layer 1 or layer 3.

Optionally, the one or more measurement metrics include one or more of following: position-related information; information related to one or more time measurement metrics; one or more angle measurement metrics; one or more beam measurement metrics; one or more beam quality measurement metrics; one or more channel quality measurement metrics.

Optionally, the CSI feedback method includes one or more of following:
a model-based CSI feedback method, and a codebook-based CSI feedback method; and/or,
the CSI determination method includes one or more of following:
   a model-based CSI determination method, and a codebook-based CSI determination method.

Optionally, the CSI determination method is used for one or more of following: CSI compression, and CSI prediction.

Optionally, the CSI report comprises the monitoring assistant information for the first object;
the CSI report is a CSI report used for monitoring the first object; and/or, the CSI report includes an information field configured to indicate the monitoring assistant information for the first object.

Optionally, transmitting the monitoring assistant information for the first object based on the first signaling includes any of following:
transmitting the monitoring assistant information for the first object in response to the first signaling;
determining the monitoring assistant information for the first object based on the first signaling, and transmitting the determined monitoring assistant information for the first object;
determining a transmitting method of the monitoring assistant information for the first object based on the first signaling, and transmitting the monitoring assistant information for the first object based on the transmitting method.

Optionally, the monitoring assistant information includes the CSI, the first signaling includes information indicating a feedback method of the CSI, wherein transmitting the monitoring assistant information for the first object based on the first signaling includes transmitting the CSI based on the feedback method of the CSI indicated by the first signaling.

Optionally, the monitoring assistant information includes the CSI, the CSI includes a first CSI obtained based on a model, and the first CSI includes one or more CSIs.

Optionally, one or more of following is included in the method:
each CSI of the one or more CSIs included in the first CSI corresponds to a model, or any two CSIs of the one or more CSIs included in the first CSI are CSIs obtained based on different models;
the one or more CSIs included in the first CSI correspond to the same channel;
the one or more CSIs included in the first CSI correspond to the same reference signal;
the one or more CSIs included in the first CSI correspond to the same reference signal resource;
the one or more CSIs included in the first CSI are not transmitted at a same time, or the one or more CSIs included in the first CSI are transmitted at a same time;
the one or more CSIs included in the first CSI are transmitted in same uplink control information UCI, or the one or more CSIs included in the first CSI are transmitted in multiple UCIs;
the one or more CSIs included in the first CSI are transmitted on a same channel, or the one or more CSIs included in the first CSI are transmitted on multiple channels.

Optionally, the monitoring assistant information includes the CSI, and transmitting the monitoring assistant information for the first object based on the first signaling includes any of following:
determining, based on the first signaling, the transmitting time of the CSI for monitoring the first object, and transmitting the CSI at the transmitting time;
determining a period of monitoring the first object based on the first signaling, and transmitting the CSI according to the period.

Optionally, the first communication device includes a terminal, and the second communication device includes a base station or a third communication device; or,
the first communication device includes a base station, and the second communication device includes a third communication device or terminal; wherein, the third communication device is a device different from the base station and the terminal.

An information processing method performed by a second communication device is provided in the embodiments of the present disclosure. The method includes: transmitting a first signaling to the first communication device; receiving monitoring assistant information for the first object from the first communication device; wherein the first object includes one or more of following: a model; a Channel state information (CSI) determination method; a CSI feedback method; a positioning method; a beam management method.

Optionally, the method further includes monitoring the first object based on the monitoring assistant information.

Optionally, monitoring the first object based on the monitoring assistant information includes: evaluating performance of the first object based on the monitoring assistant information.

Optionally, the first signaling includes one or more of following indication information:
information instructing the first communication device to transmit or determine the monitoring assistant information for the first object;
information indicating an identifier ID related to the first object;
information indicating a reference signal resource corresponding to the monitoring assistant information for the first object;
information indicating time corresponding to the monitoring assistant information for the first object;
information instructing the first communication device to determine a time domain resource of the monitoring assistant information for the first object;
information instructing the first communication device to determine time-frequency resources of the monitoring assistant information for the first object;
information instructing the first communication device to determine a period of the monitoring assistant information for the first object;
information indicating a transmission occasion in which the first communication device transmits the monitoring assistant information for the first object;
information instructing a time domain resource used by the first communication device to transmit the monitoring assistant information for the first object;
information indicating a period in which the first communication device transmits the monitoring assistant information for the first object;
information indicating a transmission position and/or a channel corresponding to the monitoring assistant information for the first object;
information instructing the first communication device to transmit a CSI report corresponding to the monitoring assistant information for the first object;
information instructing the first communication device to transmit the CSI used for monitoring the first object;
information indicating CSI-report related information;
information indicating a determination method and/or a feedback method of CSI used for monitoring the first object;
information indicating content and/or format included in the monitoring assistant information for the first object;
information indicating an activated model.

Optionally, the information related to the CSI report includes one or more of following: content included in the CSI report; a format of the CSI report; a feedback method of the CSI included in the CSI report.

Optionally, the information indicating the ID includes one or more of the following: a model ID; a functionality ID; a scenario type; wherein the functionality ID is configured to indicate an ID of one or more of following functionalities: CSI compression feedback; CSI prediction; positioning; beam management; resource scheduling.

Optionally, information of the time includes one or more of following: time information of determining the monitoring assistant information for the first object; time information of monitoring a reference signal corresponding to the monitoring assistant information for the first object.

Optionally, the information of the time further includes one or more of following: starting time of the monitoring assistant information for the first object; ending time of the monitoring assistant information for the first object; a duration of the monitoring assistant information for the first object; effective time of the first signaling.

Optionally, the monitoring assistant information includes one or more of following: identifier (ID) information; channel state information (CSI); one or more measurement metrics; information used to indicate a first performance metric.

Optionally, the ID information includes one or more of the following: a model ID; a functionality ID; a scenario type.

Optionally, the CSI includes one or more of following: CSI corresponding to at least one model; non-model-based CSI; precoding matrix information; rank information; channel quality indicator (CQI).

Optionally, the first performance metric includes one or more of following: a performance metric corresponding to the first object; an accuracy index; a system performance metric; an index corresponding to distribution; a performance metric of layer 1 or layer 3.

Optionally, the one or more measurement metrics include one or more of following: position-related information; information related to one or more time measurement metrics; one or more angle measurement metrics one or more beam measurement metrics; one or more beam quality measurement metrics; one or more channel quality measurement metrics.

Optionally, the CSI feedback method includes one or more of following:
a model-based CSI feedback method, and a codebook-based CSI feedback method; and/or,
the CSI determination method includes one or more of following:
   a model-based CSI determination method, and a codebook-based CSI determination method.

Optionally, the CSI determination method is used for one or more of following: CSI compression, and CSI prediction.

Optionally, the CSI report comprises the monitoring assistant information for the first object;
the CSI report is a CSI report used for monitoring the first object; and/or, the CSI report includes an information field configured to indicate the monitoring assistant information for the first object.

Optionally, the monitoring assistant information includes the CSI, the first signaling includes information indicating a feedback method of the CSI, wherein receiving the monitoring assistant information for the first object from the first communication device includes receiving the CSI transmitted from the first communication device based on the feedback method of the CSI indicated by the first signaling.

Optionally, the monitoring assistant information includes the CSI, the CSI includes a first CSI obtained based on a model, and the first CSI includes one or more CSIs.

Optionally, one or more of the following are included in the method:
each CSI of the one or more CSIs included in the first CSI corresponds to a model, or any two CSIs of the one or more CSIs included in the first CSI are CSIs obtained based on different models;
the one or more CSIs included in the first CSI correspond to the same channel;
the one or more CSIs included in the first CSI correspond to the same reference signal;
the one or more CSIs included in the first CSI correspond to the same reference signal resource;
the one or more CSIs included in the first CSI are not received at a same time, or the one or more CSIs included in the first CSI are received at a same time;
the one or more CSIs included in the first CSI are received in same uplink control information UCI, or the one or more CSIs included in the first CSI are received in multiple UCIs;
the one or more CSIs included in the first CSI are received on a same channel, or the one or more CSIs included in the first CSI are received on multiple channels.

Optionally, the monitoring assistant information includes the CSI, and receiving the monitoring assistant information for the first object from the first communication device includes: periodically receiving the CSI.

Optionally, the first communication device includes a terminal, and the second communication device includes a base station or a third communication device; or,
the first communication device includes a base station, and the second communication device includes a third communication device or terminal; wherein, the third communication device is a device different from the base station and the terminal.

A first communication device is further provided in the embodiments of the present disclosure. The device includes: a memory, a transceiver and a processor, wherein: the memory is configured to store a computer program; the transceiver is configured to transmit and receive data under the control of the processor; the processor is configured to read the computer program in the memory and perform following operations:
receiving a first signaling transmitted from a second communication device; transmitting monitoring assistant information for a first object based on the first signaling; wherein, the first object includes one or more of following: a model; a Channel state information (CSI) determination method; a CSI feedback method; a positioning method; a beam management method.

A second communication device is further provided in the embodiments of the present disclosure. The device includes: a memory, a transceiver and a processor, wherein: the memory is configured to store a computer program; the transceiver is configured to transmit and receive data under the control of the processor; the processor is configured to read the computer program in the memory and perform following operations:
transmitting a first signaling to the first communication device; receive monitoring assistant information for the first object from the first communication device; wherein the first object includes one or more of following: a model; a Channel state information (CSI) determination method; a CSI feedback method; a positioning method; a beam management method.

A first communication device is further provided in the embodiments of the present disclosure. The device includes: a first receiving unit configured to receive a first signaling transmitted from a second communication device; a first transmitting unit configured to transmit monitoring assistant information for a first object based on the first signaling; wherein, the first object includes one or more of following: a model; a Channel state information (CSI) determination method; a CSI feedback method; a positioning method; a beam management method.

A second communication device is further provided in the embodiments of the present disclosure. The device includes: a first transmitting unit configured to transmit a first signaling to the first communication device; a first receiving unit configured to receive monitoring assistant information for the first object from the first communication device; wherein the first object includes one or more of following: a model; a Channel state information (CSI) determination method; a CSI feedback method; a positioning method; a beam management method.

A processor-readable storage medium is further provided in the embodiments of the present disclosure, wherein the processor-readable storage medium stores a computer program, and the computer program is configured to cause a processor to execute the information processing methods provided in the present disclosure.

In the embodiments of the present disclosure, a monitoring method for monitoring the model, monitoring the CSI determination method, monitoring the CSI feedback method, monitoring the positioning method and/or monitoring the beam management method is provided, so that the monitoring of the model, the CSI determination method, the CSI feedback method, the positioning method and/or the beam management method has better performance; and reduces feedback overhead.

### BRIEF DESCRIPTION OF THE DRAWINGS

Fig. 1 is a schematic structural diagram of a network architecture applicable to implementation of the present disclosure;
Fig. 2 is a flowchart of an information processing method provided by some embodiments of the present disclosure;
Fig. 3 is a flowchart of another information processing method provided by some embodiments of the present disclosure;
Fig. 4 is a structural diagram of a first communication device provided by some embodiments of the present disclosure;
Fig. 5 is a structural diagram of a second communication device provided by some embodiments of the present disclosure;
Fig. 6 is a structural diagram of another first communication device provided by some embodiments of the present disclosure;
Fig. 7 is a structural diagram of another second communication device provided by some embodiments of the present disclosure.

### DETAILED DESCRIPTION

In order to make technical problems, technical solutions and advantages to be solved by the present disclosure clearer, a detailed description will be given below with reference to accompanying drawings and specific embodiments.

In the embodiments of the present disclosure, a term "and/or" describes association of associated objects, indicating that there can be three relationships, for example, A and/or B can mean these three situations as follow: A exists alone, A and B exist simultaneously, and B exists alone.. The character "/" generally indicates that related objects are in an "or" relationship.

In the embodiments of the present disclosure, a term "plurality of" refers to two or more than two, and other quantifiers are similar to it.

The technical solutions in the embodiments of the present disclosure will be clearly and completely described below with reference to the accompanying drawings in the embodiments of the present disclosure. Obviously, the described embodiments are only some of the embodiments of the present disclosure, not all of the embodiments. Based on the embodiments in the present disclosure, all other embodiments obtained by those of ordinary skill in the art without creative efforts fall within the protection scope of the present disclosure.

The technical solutions provided by the embodiments of the present disclosure can be applied to a variety of systems, especially 5G systems or 6G systems. For example, applicable systems may be a global system of mobile communication (GSM) system, a code division multiple access (CDMA) system, a wideband code division multiple access (WCDMA) system, a general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G (New Radio, NR) system, a 6G system, etc. These various systems include terminal devices and network side device. The system can also include a core network part, such as an Evolved Packet System (EPS), a 5G system (5GS), etc.

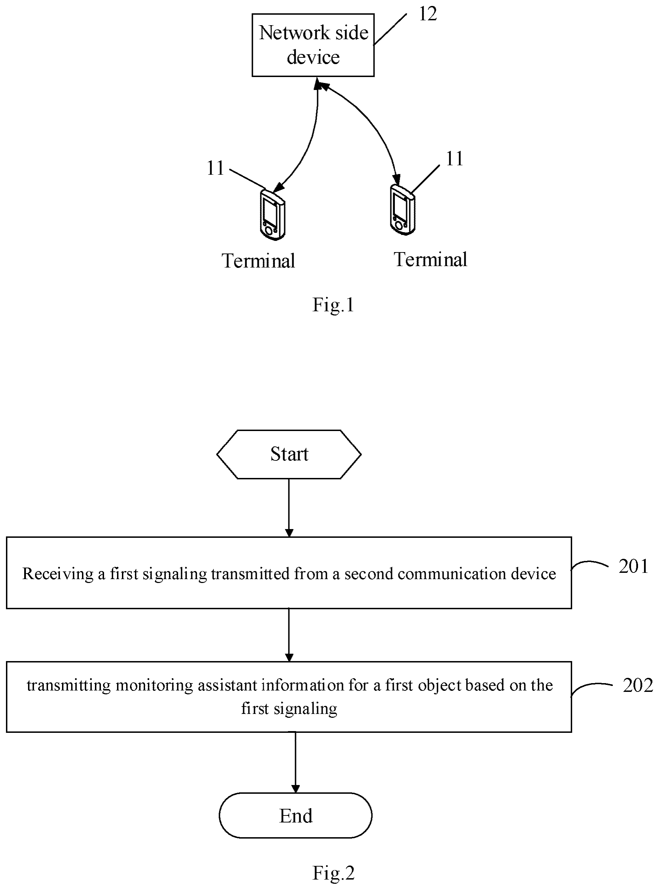

Referring to Fig. 1. Fig. 1 is a schematic structural diagram of a network architecture applicable to implementation of the present disclosure. As shown in Fig. 1, the architecture includes multiple terminals 11 and network side devices 12, wherein, the terminal 11 involved in the embodiment of the present disclosure may be a device that provides voice and/or data connectivity to users, a handheld device with a wireless connection function, or other processing devices connected to a wireless modem, etc. In different systems, names of terminal devices may also be different. For example, in a 5G system, the terminal device may be called User Equipment (UE). Wireless terminal device can communicate with one or more core networks (Core Network, CN) via a Radio Access Networks (RAN). The wireless terminal device can be a mobile terminal device, such as a mobile phone (also known as a "cell phone") and a computer with mobile terminal devices, which may be, for example, a portable, a pocket-sized, a handheld, a computer-built-in or a vehicle-mounted mobile device, which exchange speech and/or data with the radio access network. For example, Personal Communication Service (PCS) phones, cordless phones, Session Initiated Protocol (SIP) phones, Wireless Local Loop (WLL) stations, Personal Digital Assistants (PDA), Redcap terminal and other equipment. Wireless terminal devices may also be called a system, a subscriber unit, a subscriber station, a mobile station, a mobile station, a remote station, or an access point, a remote terminal, an access terminal, a user terminal, a user agent, a user device, which are not limited in the embodiments of the present disclosure.

The network side device 12 involved in the embodiments of the present disclosure may be a radio access network device or a core network device;
The radio access network device may be a base station, and the base station may include multiple cells that provide services for terminals. Depending on specific application scenarios, a base station can also be called an access point, or can be a device, in the access network, that communicates with a wireless terminal device through one or more sectors on an air interface, or can be named by another name. The network side device can be used to transform received air frames to Internet Protocol (IP) packets or transform IP packets to air frames, and act as a router between the wireless terminal device and the rest of the access network, where the rest of the access network can include an Internet Protocol (IP) communications network. The network side device can also coordinate attribute management of the air interface. For example, the network side device involved in the embodiment of the present disclosure may be a Base Transceiver Station (BTS) in the Global System for Mobile communications (GSM) or Code Division Multiple Access (CDMA) system, or can also be the network side device (NodeB) in the Wide-band Code Division Multiple Access (WCDMA) system, or can be an evolutional Node B (eNB or e-NodeB) in the Long Term Evolution (LTE) system, or the gNB in the next generation system (5G), or a base station in 6G, or a Home evolved Node B (HeNB), a relay node, a home base station (femto), a pico base station (pico), etc., The embodiments of the present disclosure are not limited thereto. In some network structures, network side devices may include centralized units (CU) and distributed units (DU). The centralized units and the distributed units may also be arranged geographically separately. In some network structures, the network side devices may include a Transmitting Receiving Point (TRP).

Core network devices may include but are not limited to one or more of the following: core network nodes, core network functions, mobility management entities (Mobility Management Entity, MME), access and mobility management functions (Access and Mobility Management Function, AMF), session management function (Session Management Function, SMF), User Plane Function (UPF), Policy Control Function (PCF), Policy and Charging Rules Function (PCRF), Edge Application Service Discovery function (Edge Application Server Discovery Function, EASDF), Unified Data Management (UDM), Unified Data Repository (UDR), Home Subscriber Server (HSS), centralized network configuration (Centralized network configuration (CNC), Network Repository Function (NRF), Network Exposure Function (NEF), Local NEF (Local NEF, or L-NEF), Binding Support Function (BSF), Application Function (PSA), etc. It should be noted that in the embodiments of the present disclosure, only the core network device in the NR system is used as an example for introduction, and the specific type of the core network device is not limited.

It should be noted that in this embodiment of the present disclosure, the terminal is connected to the core network through the access network device.

In the embodiments of the present disclosure, the network side and the terminal can use one or more antennas to perform Multi-Input Multi-Output (MIMO) transmission therebetween. The MIMO transmission can be Single User MIMO (SU-MIMO) or Multiple User MIMO (MU-MIMO). Depending on the shape and the number of root antenna combinations, MIMO transmission can be 2-Dimension MIMO (2D-MIMO), 3-Dimension MIMO (3D-MIMO), Full-Dimension MIMO (FD-MIMO) or massive-MIMO, or can be diversity transmission, precoding transmission or beamforming transmission, etc.

Referring to Fig. 2. Fig. 2 is a flowchart of an information processing method provided by some embodiments of the present disclosure. The method is applied to a first communication device. As shown in Fig. 2, the method includes the following steps:
Step 201: receiving a first signaling transmitted from a second communication device;
Step 202: transmitting monitoring assistant information for a first object based on the first signaling.

The first object includes one or more of the following:
a model;
a Channel state information (CSI) determination method and/or a CSI feedback method;
a positioning method;
a beam management method.

Optionally, the first communication device includes a terminal, the second communication device includes a base station or a third communication device; or the first communication device includes a base station, the second communication device includes a third communication device, or a terminal; wherein the third communication device is a device different from the base station and the terminal. The third communication device may be a Location Management Function (LMF) or a device specifically used for AI/ML model monitoring.

In this embodiment of the present disclosure, the first communication device receives the first signaling transmitted from the second communication device, and transmits the monitoring assistant information for the first object to the second communication device based on the first signaling, so that the second communication device can implement monitoring of the first object, thereby achieving that monitoring of the model, the CSI determination method, the CSI feedback method, the positioning method and/or the beam management method have better performance, and reducing a feedback overhead.

The model includes, but is not limited to, AI models, ML models, neural network models, data-driven technology models, etc., and is also referred to as AI/ML models below. The model may be a model deployed in the first communication device, or a model deployed in the second communication device, etc. The CSI feedback method may include one or more of the following: a model-based CSI feedback method and a codebook-based CSI feedback method. The CSI determination method may include one or more of the following: a model-based CSI determination method; a codebook-based CSI determination method. The CSI determination method may be used for one or more of the following: CSI compression, and CSI prediction. The positioning method includes triangulation positioning (such as DL-TDOA (Downlink-Time Difference Of Arrival), UL-TDOA (Uplink Time Difference of Arrival), etc.) based methods, functional positioning methods and specific-model based positioning methods. The functional positioning method includes that the AI/ML model directly outputs a position of a positioning terminal, and the AI/ML model outputs time-measurement-metrics related information/angle measurement metrics, etc. The specific-model based positioning method includes instructing the AI/ML model to perform positioning feedback. The beam management method includes determining optimal beams that can be used for transmitting beams, receiving beams, and transmitting and receiving beam pairs.

Optionally, the first signaling includes one or more of the following indication information:
information instructing the first communication device to transmit or determine the monitoring assistant information for the first object;
information indicating an identifier ID related to the first object;
information indicating reference signal resources corresponding to the monitoring assistant information for the first object;
information indicating time corresponding to the monitoring assistant information for the first object;
information instructing the first communication device to determine a time domain resource of the monitoring assistant information for the first object;
information instructing the first communication device to determine time-frequency resources of the monitoring assistant information for the first object;
information instructing the first communication device to determine a period of the monitoring assistant information for the first object;
information indicating a transmission occasion in which the first communication device transmits the monitoring assistant information for the first object;
information instructing a time domain resource used by the first communication device to transmit the monitoring assistant information for the first object;
information indicating a period in which the first communication device transmits the monitoring assistant information for the first object;
information indicating a transmission position and/or a channel corresponding to the monitoring assistant information for the first object;
information instructing the first communication device to transmit a CSI report corresponding to the monitoring assistant information for the first object;
information instructing the first communication device to transmit CSI used for monitoring the first object;
information indicating CSI-report related information;
information indicating a determination method and/or a feedback method of CSI used for monitoring of the first object;
information indicating content and/or format included in the monitoring assistant information for the first object;
information indicating an activated model.

The first signaling includes information instructing the first communication device to transmit or determine the monitoring assistant information for the first object. The first signaling carrying the information of indicating can be understood as an activation/trigger signaling. In response to the first signaling, the first communication device may transmit the monitoring assistant information of the model, or the first communication device may determine the monitoring assistant information of the model. In this embodiment, the first signaling may include signaling that activates/triggers the first communication device to determine/transmit the monitoring assistant information for the first object.

Optionally, the first object can be indicated by the following information:
an index of the first object;
reference signal (RS) indication information corresponding to the first object (for example, information indicating an ID of a RS corresponding to the first object);
reference signal (RS) resource indication information corresponding to the first object (for example, information indicating an ID of a RS corresponding to the first object);
reference signal (RS) resource set indication information corresponding to the first object (for example, information indicating an ID of a RS resource set corresponding to the first object);
CSI report indication information corresponding to the first object (such as information indicating a CSI report ID corresponding to the first object);
CSI configuration indication information corresponding to the first object (for example, information indicating a CSI config ID corresponding to the first object); and so on.

Additionally, when the first object includes a model, the model may be one or more AI/ML models.

The first signaling includes information indicating the identifier (ID) related to the first object, and the information indicating the ID includes one or more of the following:
a model ID;
a functionality ID;
a scenario type.

The functionality ID is used to indicate an ID of one or more of the following functionalities:
CSI compression feedback;
CSI prediction;
positioning;
beam management;
resource scheduling.

Optionally, the model ID is the model ID corresponding to the monitoring assistant information of the model. The first communication device may determine the corresponding AI/ML model based on the model ID, and feed back model monitoring assistant information corresponding to the AI/ML model.

The functionality ID may be used to indicate the type of functionality, such as one or more of CSI compression feedback, CSI prediction, positioning, beam management, resource scheduling and other functions. The first communication device can determine to-be-sent model monitoring assistant information corresponding to which function based on the functionality ID. There may be differences in the monitoring assistant information corresponding to different functionality IDs, and the first communication device can determine the content included in the monitoring assistant information based on the functionality ID.

The scenario type is used to indicate an application scenario of the first object, such as indoor/outdoor, factory, city, etc. There may be differences in the monitoring assistant information corresponding to different scenario types. The first communication device may determine the content included in the monitoring assistant information based on the scenario type.

In addition, the ID information may include at least two items of a model ID, a functionality ID, and a scenario type. For example, the ID information may include a model ID and a functionality ID, or the ID information may also include the model ID and the scenario type. The ID information may also include the functionality ID and the scenario type. The ID information may also include the model ID, the functionality ID and the scenario type. The first communication device may determine the AI/ML model used to generate the model monitoring assistant information based on the ID information, and determine to-be-sent AI/ML model monitoring assistant information corresponding to which functionalities and/or service scenarios.

Optionally, the first communication device determines the content included in the monitoring assistant information based on the functionality ID. That is, there are at least two functionality IDs, and the contents included in the monitoring assistant information corresponding to the two functionality IDs are different. For example, the monitoring assistant information corresponding to CSI compression feedback and the monitoring assistant information corresponding to positioning include different contents. The first communication device determines a reporting method of the monitoring assistant information based on the functionality ID. That is, there are at least two functionality IDs, and there are differences in reporting methods of the monitoring assistant information corresponding to the two functionality IDs. For example, the reporting methods of the monitoring assistant information corresponding to CSI compression feedback and the monitoring assistant information corresponding to the positioning are different. The first communication device determines the format of the monitoring assistant information based on the functionality ID. That is, there are at least two functionality IDs, and the formats of the monitoring assistant information corresponding to the two functionality IDs are different. For example, the format of the monitoring assistant information corresponding to the CSI compression feedback and the format of the monitoring assistant information corresponding to the positioning are different.

In addition, it should be noted that the embodiment of the present disclosure is also applicable to the scenario where the contents/the formats/the reporting methods of the monitoring assistant information corresponding to different functionality IDs are the same. In this scenario, the first communication device does not need to determine the content/the format/the reporting method of the model monitoring assistant information based on the functionality ID.

The first signaling includes the information indicating reference signal resources corresponding to the monitoring assistant information for the first object. The reference signal resources corresponding to the monitoring assistant information may include reference signal resources used to determine the monitoring assistant information. The first communication device may determine the monitoring assistant information based on the reference signal resources. A second communication device may also configure dedicated reference signal resources for monitoring the first object. The reference signal resources may be a Channel State Information Reference Signal CSI-RS resource or a Tracking Reference Signal TRS (CSI-RS for Tracking) resource, etc. The information of the reference signal resource corresponding to the monitoring assistant information for the first object may be included in configuration information/indication information/trigger information of the reference signal resource. For example, an identification field/an information field used to indicate that the reference signal resource is used for monitoring the first object is included in the configuration information/the indication information/the trigger information of the reference signal resource. In this case, it can be considered that the configuration information/the indication information/the trigger information of the reference signal resources is included in the first signaling. The information used to instruct the first communication device to transmit the monitoring assistant information for the first object and the information used to indicate the first reference signal resource in the first signaling may be carried through the same message/information field/signaling, or may be carried through different messages/information fields/signalings. For example, the signaling used to indicate that the first reference signal resource is used for the model monitoring is configuration signaling/trigger signaling/indication signaling of the first reference signal resource, and the signaling used to instruct the first communication device to transmit the monitoring assistant information for the first object is another signaling. That is, the first signaling includes at least two signalings: configuration signaling/trigger signaling/indication signaling of reference signal resources, and signaling used to instruct the first communication device to transmit the monitoring assistant information for the first object. As another example, the first signaling is configuration signaling/trigger signaling/indication signaling of the reference signal resources, which also indicates that the reference signal resources are used for monitoring the first object, and indicates the first communication device to transmit the monitoring assistant information. That is, when the first communication device receives the first signaling, the first communication device needs to determine the monitoring assistant information for the first object using the reference signal resources, in response to the first signaling, and transmits the model monitoring assistant information for the first object.

Optionally, if the second communication device indicates that a certain reference signal resource is used for monitoring the first object, the monitoring assistant information for the first object should be included in the CSI feedback corresponding to the certain reference signal resource when the first communication device performs the CSI feedback. Optionally, if the second communication device indicates that a certain reference resource is used for monitoring the first object, the second communication device triggers the first communication device to receive the reference signal corresponding to the reference signal resource, which means that the second communication device transmits a monitoring signaling of the first object to the first communication device, the signaling triggering the first communication device to report a CSI for monitoring the first object, that is, the CSI is the monitoring assistant information for the first object.

The first signaling includes information indicating the time corresponding to the monitoring assistant information for the first object, and information of the time includes one or more of the following:
time information of determining the monitoring assistant information for the first object;
time information of monitoring the reference signal corresponding to the monitoring assistant information for the first object.

Optionally, the information of the time also includes one or more of the following:
starting time of the monitoring assistant information for the first object;
ending time of the monitoring assistant information for the first object;
a duration of the monitoring assistant information for the first object;
effective time of the first signaling.

Specifically, the first communication device determines, based on the information of the time, the starting time of obtaining the monitoring assistant information for the first object, that is, the first communication device determines, based on the information of the time, when to start obtaining the monitoring assistant information. The first communication device determines, based on the information of the time, the ending time of obtaining the monitoring assistant information for the first object, that is, the first communication device determines the ending time of obtaining the monitoring assistant information based on the information of the time, and obtains the monitoring assistant information before the ending time, the monitoring assistant information will no longer be obtained after the ending time. The first communication device determines a duration of obtaining the monitoring assistant information for the first object based on the information of the time, and obtains the monitoring assistant information within the duration. The first communication device determines the effective time of the signaling of the monitoring assistant information for the first object based on the information of the time.

Optionally, in this embodiment, the information instructing the first communication device to transmit the monitoring assistant information for the first object and the information indicating the time corresponding to transmitting the monitoring assistant information for the first object can be transmitted through the same message/information field/signaling. It can also be carried through different messages/information fields/signalings.

Optionally, the first signaling includes information instructing the first communication device to determine a time domain resource of the monitoring assistant information for the first object, and the first communication device determines the time domain resource of the monitoring assistant information for the first object based on the first signaling. The information instructing the first communication device to transmit the monitoring assistant information for the first object and the information indicating determining the time domain resource corresponding to the monitoring assistant information for the first object may be carried through the same message/information field/signaling, or may be carried through different messages/information fields/signalings.

Optionally, the first signaling includes information instructing the first communication device to determine the time-frequency resources of the monitoring assistant information for the first object, and the first communication device determines, based on the first signaling, the time-frequency resources of the monitoring assistant information for the first object. The information instructing the first communication device to transmit the monitoring assistant information for the first object and the information indicating determining the time-frequency resource corresponding to the monitoring assistant information for the first object may be carried in the same message/information field/signaling, or may be carried in different messages/information fields/signalings.

Optionally, the first signaling includes information instructing the first communication device to determine a period of the monitoring assistant information for the first object, and the first communication device determines the period of the monitoring assistant information for the first object based on the first signaling, and obtains the monitoring assistant information for the first object according to the period. The information instructing the first communication device to transmit the monitoring assistant information for the first object and the information indicating determining the period corresponding to the monitoring assistant information for the first object may be carried in the same message/information field/signaling, or may be carried in different messages/information fields/signalings.

Optionally, the first signaling includes information indicating the transmission occasion in which the first communication device transmits the monitoring assistant information for the first object, the first communication device determines, based on the first signaling, the transmission occasion in which the monitoring assistant information for the first object is transmitted, and transmits the monitoring assistant information for the first object according to the transmission occasion. The information instructing the first communication device to transmit the monitoring assistant information for the first object and the information indicating the transmission occasion corresponding to transmission of the monitoring assistant information for the first object may be carried in the same message/information field/signaling, or may be carried in different messages/information fields/signalings.

Optionally, the first signaling includes information indicating the time domain resources through which the first communication device transmits the monitoring assistant information for the first object, and the first communication device determines, based on the first signaling, the time domain resource of transmitting the monitoring assistant information for the first object, and the first communication device transmits the monitoring assistant information for the first object using the time domain resource. The information instructing the first communication device to transmit the monitoring assistant information for the first object and the information indicating the time domain resource corresponding to transmission of the monitoring assistant information for the first object may be carried in the same message/information field/signaling, or may be carried in different messages/information fields/signalings.

Optionally, the first signaling includes information indicating the period of transmitting the monitoring assistant information for the first object by the first communication device, and the first communication device determines the period of transmitting the monitoring assistant information for the first object based on the first signaling, and transmits the monitoring assistant information for the first object according to the period. The information instructing the first communication device to transmit the monitoring assistant information for the first object and the information indicating the period corresponding to transmission of the monitoring assistant information for the first object may be carried in the same message/information field/signaling, or may be carried in different messages/information fields/signalings.

Optionally, the first signaling includes information indicating the transmission position and/or the channel corresponding to the monitoring assistant information for the first object, and the first communication device determines, based on the first signaling, the transmission position and/or the channel for transmitting the monitoring assistant information for the first object, and transmits the monitoring assistant information for the first object at the transmission position and/or the channel. The information instructing the first communication device to transmit the monitoring assistant information for the first object and the information indicating the transmission position and/or the channel corresponding to transmission of the monitoring assistant information for the first object may be carried in the same message/information field/signaling, or may be carried in different messages /information fields /signalings.

Optionally, the first signaling includes information instructing the first communication device to transmit a CSI report corresponding to the monitoring assistant information for the first object, and the CSI report may carry the monitoring assistant information for the first object. The CSI report is a CSI report dedicated to monitoring of the first object; and/or the CSI report includes an information field used to indicate the monitoring assistant information for the first object. Specifically, the second communication device may configure a special CSI configuration/CSI report configuration for the monitoring assistant information for the first object. That is, there is a type of CSI report specifically used to carry monitoring assistant information for the first object; or, there is a type of CSI report specifically used to determine the monitoring assistant information for the first object. For example, the configuration information/indication information/trigger information of the CSI report includes information indicating that the CSI report corresponds to monitoring of the first object; or, the configuration/instruction/trigger information of the CSI report includes an identification field/an information field used to indicate the monitoring assistant information for the first object. In this case, it can be considered that the first signaling includes the configuration information/instruction/trigger information of the CSI report. Optionally, the CSI report may not be a CSI report dedicated to monitoring the first object. That is, the second communication device does not need to configure special CSI configuration/CSI report configuration for the monitoring assistant information for the first object. When the second communication device instructs the first communication device to transmit the CSI report corresponding to the monitoring assistant information for the first object, the CSI report corresponding to the CSI configuration/CSI report configuration carries the monitoring assistant information for the first object; otherwise, the CSI report corresponding to the CSI configuration/CSI report configuration reports other information.

Optionally, the first signaling includes information instructing the first communication device to transmit a CSI for monitoring the first object, and the first communication device transmits the CSI for monitoring the first object based on the first signaling.. For example, the current CSI feedback method for normal communication is a codebook-based CSI feedback method. The first signaling instructing the first communication device to transmit the CSI based on the AI/ML model is equivalent to instructing the first communication device to transmit a CSI for model monitoring. The first communication device can know that the second communication device will monitor the performance of the CSI based on the AI/ML model.

Optionally, the first signaling includes information related to the CSI report, and the first communication device uses the information related to the CSI report to determine the monitoring assistant information for the first object. The information related to the CSI report includes one or more of the following: content included in the CSI report; a format of the CSI report; and a feedback method of the CSI included in the CSI report. The format of the CSI report includes one or more of a coding method (or parsing method) and an information field of the CSI report. The first communication device may determine the format of the CSI report according to the first signaling, and transmit the CSI report based on the format. The feedback method of the CSI may include: a functional CSI feedback method, for example, a CSI feedback method based on AI/ML model, a codebook-based CSI feedback method, a feedback method based on CSI compression, a feedback method based on CSI prediction, etc. The CSI feedback method may also include a CSI feedback method of a specific model, for example, the first signaling indicates CSI feedback based on the first AI/ML model. For example, the first signaling instructs the first communication device to feed back N CSIs, or to feed back one CSI. In addition, the first signaling may also instruct the first communication device to feed back a CSI based on the AI/ML model, and/or the first signaling may instruct the first communication device to feed back a high-precision CSI (for example, a ground truth CSI, a CSI based on a high-precision codebook, and a CSI with more quantification bit numbers), and/or the first signaling instructs the first communication device to feed back a codebook-based CSI.

Optionally, the first signaling includes information indicating a CSI determination method and/or a CSI feedback method for monitoring the first object, and the first communication device determines, based on the first signaling, the CSI determination method and/or the CSI feedback method for monitoring the first object, and determines, according to the determination method, the CSI for monitoring the first object and/or transmits the CSI for monitoring the first object to the second communication device according to the feedback method; wherein the CSI for monitoring the first object includes the monitoring assistant information and is transmitted from the first communication device to the second communication device.

Optionally, the first signaling includes information indicating the content and/or the format included in the monitoring assistant information for the first object, and the first communication device determines, based on the first signaling, the content and/or the format included in the monitoring assistant information for the first object. The first communication device may transmit the monitoring assistant information for the first object with the content included in the monitoring assistant information, or the first communication device may transmit the monitoring assistant information of the first monitoring object according to the format. The format includes one or more of an encoding method (also called a parsing method) of the monitoring assistant information and an information field.

Optionally, the first signaling includes information indicating an activated model. Based on the first signaling, the first communication device may activate/enable the first AI/ML model to instruct the first communication device to determine/transmit the monitoring assistant information of the first AI/ML model. That is, in response to activating/enabling the first AI/ML model, the first communication device determines/transmits model monitoring assistant information of the first AI/ML model.

Optionally, the first signaling includes one or more of the following: Radio Resource Control (RRC) signaling; Medium Access Control Control Element (MAC CE) signaling; Downlink Control Information (DCI) signaling. The same signaling is used to indicate one or more items of the above indication information included in the first signaling. At least two pieces of the above indication information are indicated by using different signaling, for example, one piece of indication information is indicated through MAC CE, and another piece of indication information is indicated through RRC; or one piece of indication information is indicated through one MAC CE, and another piece of indication information is indicated through another one MAC CE; or one piece of indication information is indicated through one RRC parameter, another piece of indication information is indicated through another RRC parameter, etc.

As an optional implementation, the implementation of the present disclosure can be applicable to the scenario where N>=1 models, that is, a message is used to instruct the UE to determine/transmit the model monitoring assistant information of one model (N=1), or the first signaling instructs the first communication device to determine/transmit the model monitoring assistant information of multiple models (N>1). The model may be one AI/ML model or multiple AI/ML models. The first signaling may be for a certain AI/ML model, for example, the first signaling instructs the first communication device to determine/transmit the monitoring assistant information of the first AI/ML model; or the first signaling may be also for a certain function, for example, the first signaling instructs the first communication device to determine/transmit the monitoring assistant information of CSI feedback based on AI/ML; or, the first signaling may also be for a certain scenario, for example, the first signaling instructs the UE to determine/transmit the monitoring assistant information of CSI feedback based on the AI/ML model in a certain scenario.

As an optional implementation, the monitoring assistant information includes one or more of the following:
identifier (ID) information;
channel state information (CSI);
one or more measurement metrics;
information used to indicate a first performance metric.

The ID information includes one or more of the following: a model ID, a functionality ID, and a scenario type. The model ID, the functionality ID and the scenario type are the same as those in the above embodiment, and will not be described in detail in this embodiment. The above-mentioned monitoring assistant information is configured to indicate that the monitoring assistant information transmitted from the first communication device is the monitoring assistant information of a specific model/function/service scenario. The second communication device determines the corresponding AI/ML model and/or function and/or service scenario based on the monitoring assistant information.

Optionally, the CSI includes one or more of the following:
CSI corresponding to at least one model;
non-model-based CSI;
precoding matrix information;
rank information;
channel quality indicator (CQI).

The CSI corresponding to at least one model may be the CSI corresponding to one or more AI/ML models. The non-model-based CSI includes the codebook-based CSI, the high-precision CSI, etc. The CSI may also include: precoding matrix information, such as PMI (Precoding Matrix Indicator), rank information, such as RI (Rank Indicator), and Channel Quality Indicator (CQI), etc.

For example, the first communication device transmits information indicating a reference signal resource identifier (such as ID) and/or a CSI report identifier (CSI configuration ID, CSI report ID, etc.) and/or a CSI feedback method corresponding to the CSI to the second communication device. The second communication device determines the AI/ML model and/or the CSI feedback method corresponding to the monitoring assistant information based on the information.

Optionally, the first performance metric includes one or more of the following:
a performance metric corresponding to the first object;
accuracy index;
a system performance metric;
indexes corresponding to distribution;
performance metrics of layer 1 or layer 3.

The performance metric corresponding to the first object may be the performance metric corresponding to the AI/ML model, or the performance metric corresponding to the CSI determination method and/or the CSI feedback method, the performance metric corresponding to the positioning method, and the performance metric corresponding to a beam management method, etc. The accuracy index can include one or more of: squared generalized cosine similarity (SGCS), generalized cosine similarity (GCS), normalized Mean Squared Error (NMSE), Mean Squared Error (MSE), etc. Optionally, when the first object includes the positioning, the accuracy index may include one or more of following: a positioning position error, a time error, an angle error, LOS (line of sight)/NLOS (not line of sight) recognition accuracy, etc. The system performance metric can include one or more of BLER (Block Error Rate), throughput, hypothetical BLER, hypothetical throughput, Acknowledgement (ACK), Negative Acknowledgment (NACK), etc. The index corresponding to the distribution may include one or more of a mean, a mean square error, a distance, etc. The first performance metric may also be a performance metric of layer 1 (physical layer), a performance metric of layer 3, etc. (a performance metric obtained by averaging multiple layer-1 performance metrics or performing filtering or other processing). The first performance metric may also include other performance metrics: for example, one or more of Reference Signal Received Power (RSRP), Reference Signal Received Quality (RSRQ), noise and interference ratio (SINR), etc.

Optionally, one calculation method of the hypothetical BLER is: obtaining the RSRP/SINR corresponding to the CSI and mapping the RSRP/SINR to the hypothetical BLER. One calculation method of the hypothetical throughput is: obtaining the RSRP/SINR corresponding to the CSI and mapping the RSRP/SINR to the hypothetical throughput. For example, the Shannon's formula is used to calculate the throughput corresponding to the RSRP/SINR corresponding to the CSI.

Optionally, the one or more measurement metrics include one or more of the following:
position-related information;
information related to one or more time measurement metrics;
one or more angle measurement metrics
one or more beam measurement metrics;
one or more beam quality measurement metrics;
one or more channel quality measurement metrics.

The one or more measurement metrics may be one or more measurement metrics corresponding to one or more AI/ML models, or the one or more measurement metrics may be non-AI/ML model-based measurement metrics. For example, the first communication device transmits information indicating a reference signal resource identifier (e.g., ID) corresponding to the one or more measurement metrics. The second communication device determines the AI/ML model and/or positioning feedback method corresponding to the monitoring assistant information based on the information.

Optionally, the step 202 of transmitting the monitoring assistant information for the first object based on the first signaling includes any of the following:
transmitting the monitoring assistant information for the first object in response to the first signaling;
determining the monitoring assistant information for the first object based on the first signaling, and transmitting the determined monitoring assistant information for the first object;
determining a transmitting method of the monitoring assistant information for the first object based on the first signaling, and transmitting the monitoring assistant information for the first object based on the transmitting method.

Optionally, the monitoring assistant information includes the CSI, the first signaling includes information indicating a feedback method of the CSI, and the step 202 of transmitting the monitoring assistant information for the first object based on the first signaling includes: transmitting the CSI based on the CSI feedback method indicated by the first signaling.

For example, the first signaling instructs the first communication device to perform CSI feedback based on the AI/ML model, and the first communication device performs CSI feedback based on the AI/ML model; the first signaling instructs the first communication device to perform codebook-based CSI feedback, and the first communication device performs codebook-based CSI feedback.

Optionally, the monitoring assistant information includes the one or more measurement metrics, the first signaling instructs the first communication device to transmit positioning monitoring assistant information based on the AI/ML model, and the first communication device can know that the second communication device will perform the performance monitoring based on positioning of AI/ML models; after receiving the monitoring assistant information, the second communication device will perform the performance monitoring based on the positioning of the AI/ML model.

Optionally, the monitoring assistant information includes the CSI, the CSI includes a first CSI obtained based on a model, and the first CSI includes at least one CSI. Optionally, the at least one CSI corresponds to one or more models. Optionally, the at least one CSI corresponds to one or more methods.

Optionally, each CSI of the plurality of CSIs included in the first CSI corresponds to a model, or any two CSIs of the plurality of CSIs included in the first CSI are CSIs obtained based on different models;
the plurality of CSIs included in the first CSI correspond to the same channel;
the plurality of CSIs included in the first CSI correspond to the same reference signal;
the plurality of CSIs included in the first CSI correspond to the same reference signal resource;
the plurality of CSIs included in the first CSI are not transmitted at the same time, or the plurality of CSIs included in the first CSI are transmitted at the same time;
the plurality of CSIs included in the first CSI are transmitted in the same uplink control information UCI, or the plurality of CSIs included in the first CSI are transmitted in multiple UCIs;
the plurality of CSIs included in the first CSI are transmitted on the same channel, or the plurality of CSIs included in the first CSI are transmitted on multiple channels.

For example, the first CSI includes two CSIs. The first communication device transmits the first CSI and the second CSI. The first CSI is the CSI obtained based on the first AI/ML model, and the second CSI is the CSI obtained based on the second AI /ML model; or, the first communication device transmits the first CSI and the second CSI, the first CSI is the CSI obtained based on the first AI/ML model, and the second CSI is the CSI obtained based on the codebook. The first communication device transmits the first CSI and the second CSI, where the first CSI is CSI obtained based on the first AI/ML model, and the second CSI is the high-precision CSI.

For example, the first CSI includes three CSIs. The first communication device transmits the first CSI, the second CSI and the third CSI. The first CSI is the CSI obtained based on the first AI/ML model, and the second CSI is the CSI obtained based on the second AI/ML model, and the third CSI is the CSI obtained based on the codebook.

Optionally, the CSI report transmitted from the first communication device may include part of the information in the plurality of CSIs. For example, only the first CSI is included, or the CSI report transmitted from the first communication device may include the first CSI and the second CSI.

Optionally, the monitoring assistant information includes the CSI, and the transmitting the monitoring assistant information for the first object based on the first signaling includes any of the following:
determining, based on the first signaling, the transmitting time of the CSI for monitoring the first object, and transmitting the CSI at the transmitting time;
determining a period of monitoring the first object based on the first signaling, and transmitting the CSI according to the period.

Specifically, the first communication device determines, based on the first signaling (for example, the first signaling includes information such as a trigger instruction/an activation instruction and/or indicated monitoring start time and/or end time of the CSI feedback method) the transmitting time of the CSI used for monitoring of the model/CSI feedback method, the first communication device transmits the CSI/CSI report at the time; the second communication device receives the CSI/CSI report at the corresponding time, and performs the monitoring of the model/CSI feedback method based on the CSI/CSI report.

Specifically, the first communication device periodically transmits a CSI/CSI report for monitoring of the model/CSI feedback method, according to the period of the model/CSI feedback method indicated by the first signaling; the second communication device periodically receives the CSI/CSI report for monitoring of the model/CSI feedback method, according to the period. Optionally, the second communication device monitors the model/CSI feedback method based on the CSI/CSI report.

Optionally, the first communication device determines the end time of the monitoring of the model/CSI feedback method based on the first signaling, and transmits a CSI/CSI report for the monitoring of the model/CSI feedback method before the end time; the second communication device will no longer receive the CSI/the CSI report after the corresponding end time, that is, the monitoring of the model/CSI feedback method will no longer be performed.

In the embodiments of the present disclosure, the method of triggering, by the second communication device, the first communication device to transmit the monitoring assistant information for the first object, so that the second communication device can obtain the monitoring assistant information from the first communication device for use by monitoring at the second communication device, and the second communication device can use more information and methods for monitoring, which improves the flexibility of monitoring and enables better monitoring performance.

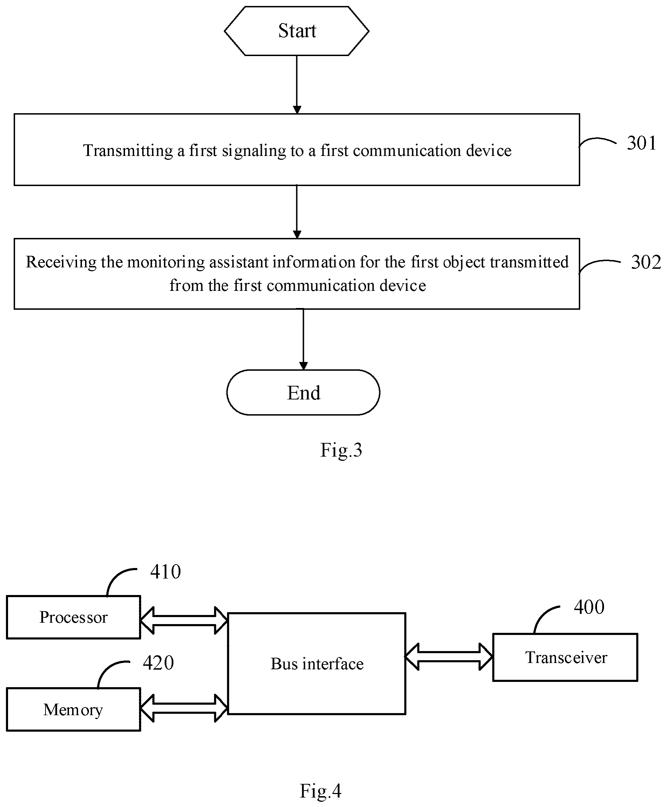

Fig. 3 is a flow chart of an information processing method provided by some embodiments of the present disclosure, the method is applied to a second communication device, as shown in Fig. 3, the method includes the following steps:
Step 301: transmitting a first signaling to the first communication device;
Step 302: receiving the monitoring assistant information for the first object transmitted from the first communication device;

The first object includes one or more of the following:
a model;
a Channel state information (CSI) determination method and/or a CSI feedback method;
a positioning method;
a beam management method.

As an optional implementation, the method further includes: monitoring the first object based on the monitoring assistant information.

Monitoring the first object based on the monitoring assistant information includes: evaluating the performance of the first object based on the monitoring assistant information.

Optionally, the first communication device includes a terminal, the second communication device includes a base station or a third communication device; or the first communication device includes a base station, the second communication device includes a third communication device, or a terminal; wherein the third communication device is a device different from the base station and the terminal. The third communication device may be a Location Management Function (LMF) or a dedicated AI/ML model monitoring device.

Optionally, the second communication device can evaluate the performance of the first object, perform model selection, model switching, model activation, model deactivation, CSI determination method fallback, CSI feedback method fallback, positioning method fallback, and beam management method, and the like.

In this embodiment of the present disclosure, the second communication device transmits the first signaling to the first communication device; and receives the monitoring assistant information for the first object transmitted from the first communication device, so that the second communication device can implement the monitoring of the first object. Monitoring of the model, the CSI determination method, the CSI feedback method, the positioning method and/or the beam management method may have better performance; and feedback overhead is reduced.

The model includes a model based on AI/ML. The CSI feedback method may include one or more of the following: a model-based CSI feedback method and a codebook-based CSI feedback method. The CSI determination method may include one or more of the following: a model-based CSI determination method; a codebook-based CSI determination method. The positioning method includes triangulation positioning (such as DL-TDOA (Downlink-Time Difference Of Arrival), UL-TDOA (Uplink Time Difference of Arrival), etc.) based methods, functional positioning methods and specific-model based positioning methods. The functional positioning method includes that the AI/ML model directly outputs a position of a positioning terminal, and the AI/ML model outputs time-measurement-metrics related information/angle measurement metrics, etc. The specific-model based positioning method includes instructing the AI/ML model to perform positioning feedback. The beam management method includes determining optimal beams that can be used for transmitting beams, receiving beams, and transmitting and receiving beam pairs.

Optionally, the first signaling includes one or more of the following indication information:
information instructing the first communication device to transmit or determine the monitoring assistant information for the first object;
information indicating an identifier ID related to the first object;
information indicating reference signal resources corresponding to the monitoring assistant information for the first object;
information indicating time corresponding to the monitoring assistant information for the first object;
information instructing the first communication device to determine a time domain resource of the monitoring assistant information for the first object;
information instructing the first communication device to determine time-frequency resources of the monitoring assistant information for the first object;
information instructing the first communication device to determine a period of the monitoring assistant information for the first object;
information indicating a transmission occasion in which the first communication device transmits the monitoring assistant information for the first object;
information instructing a time domain resource used by the first communication device to transmit the monitoring assistant information for the first object;
information indicating a period in which the first communication device transmits the monitoring assistant information for the first object;
information indicating a transmission position and/or a channel corresponding to the monitoring assistant information for the first object;
information instructing the first communication device to transmit a CSI report corresponding to the monitoring assistant information for the first object;
information instructing the first communication device to transmit CSI used for monitoring the first object;
information indicating CSI-report related information;
information indicating a determination method and/or a feedback method of CSI used for monitoring of the first object;
information indicating content and/or format included in the monitoring assistant information for the first object;
information indicating an activated model.

The first signaling includes information instructing the first communication device to transmit or determine the monitoring assistant information for the first object. The first signaling carrying the information of indicating can be understood as an activation/trigger signaling. In response to the first signaling, the first communication device may transmit the monitoring assistant information of the model, or the first communication device may determine the monitoring assistant information of the model. In this embodiment, the first signaling may include signaling that activates/triggers the first communication device to determine/transmit the monitoring assistant information for the first object.

Optionally, the first object can be indicated by the following information:
an ID (index) of the first object;
reference signal (RS) indication information corresponding to the first object (for example, information indicating an ID of a RS corresponding to the first object);
reference signal (RS) resource indication information corresponding to the first object (for example, information indicating an ID of a RS corresponding to the first object);
reference signal (RS) resource set indication information corresponding to the first object (for example, information indicating an ID of a RS resource set corresponding to the first object);
CSI report indication information corresponding to the first object (such as information indicating a CSI report ID corresponding to the first object);
CSI configuration indication information corresponding to the first object (for example, information indicating a CSI config ID corresponding to the first object); and so on.

Additionally, when the first object includes a model, the model may be one or more AI/ML models.

The first signaling includes information indicating the identifier (ID) related to the first object, and the information indicating the ID includes one or more of the following:
a model ID;
a functionality ID;
a scenario type.

The functionality ID is used to indicate an ID of one or more of the following functionalities:
CSI compression feedback;
CSI prediction;
positioning;
beam management;
resource scheduling.

Optionally, the model ID is the model ID corresponding to the monitoring assistant information of the model. The first communication device may determine the corresponding AI/ML model based on the model ID, and feed back model monitoring assistant information corresponding to the AI/ML model.

The functionality ID may be used to indicate the type of function, such as one or more of CSI compression feedback, CSI prediction, positioning, beam management, resource scheduling and other functionalities. The first communication device can determine to-be-sent model monitoring assistant information corresponding to which function based on the functionality ID. There may be differences in the monitoring assistant information corresponding to different functionality IDs, and the first communication device can determine the content included in the monitoring assistant information based on the functionality ID.

The scenario type is used to indicate an application scenario of the first object, such as indoor/outdoor, factory, city, etc. There may be differences in the monitoring assistant information corresponding to different scenario types. The first communication device may determine the content included in the monitoring assistant information based on the scenario type.

In addition, the ID information may include at least two items of a model ID, a functionality ID, and a scenario type. For example, the ID information may include a model ID and a functionality ID, or the ID information may also include the model ID and the scenario type. The ID information may also include the functionality ID and the scenario type. The ID information may also include the model ID, the functionality ID and the scenario type. The first communication device may determine the AI/ML model used to generate the model monitoring assistant information based on the ID information, and determine to-be-sent AI/ML model monitoring assistant information corresponding to which functions and/or service scenarios.

Optionally, the first communication device determines the content included in the monitoring assistant information based on the functionality ID. That is, there are at least two functionality IDs, and the contents included in the monitoring assistant information corresponding to the two functionality IDs are different. For example, the monitoring assistant information corresponding to CSI compression feedback and the monitoring assistant information corresponding to positioning include different contents. The first communication device determines a reporting method of the monitoring assistant information based on the functionality ID. That is, there are at least two functionality IDs, and there are differences in reporting methods of the monitoring assistant information corresponding to the two functionality IDs. For example, the reporting methods of the monitoring assistant information corresponding to CSI compression feedback and the monitoring assistant information corresponding to the positioning are different. The first communication device determines the format of the monitoring assistant information based on the functionality ID. That is, there are at least two functionality IDs, and the formats of the monitoring assistant information corresponding to the two functionality IDs are different. For example, the format of the monitoring assistant information corresponding to the CSI compression feedback and the format of the monitoring assistant information corresponding to the positioning are different.

In addition, it should be noted that the embodiment of the present disclosure is also applicable to the scenario where the contents/the formats/the reporting methods of the monitoring assistant information corresponding to different functionality IDs are the same. In this scenario, the first communication device does not need to determine the content/the format/the reporting method of the model monitoring assistant information based on the functionality ID.

The first signaling includes the information indicating reference signal resources corresponding to the monitoring assistant information for the first object. The reference signal resources corresponding to the monitoring assistant information may include reference signal resources used to determine the monitoring assistant information. The first communication device may determine the monitoring assistant information based on the reference signal resources. A second communication device may also configure dedicated reference signal resources for monitoring the first object. The reference signal resources may be a Channel State Information Reference Signal CSI-RS resource or a Tracking Reference Signal TRS (CSI-RS for Tracking) resource, etc. The information of the reference signal resource corresponding to the monitoring assistant information for the first object may be included in configuration information/indication information/trigger information of the reference signal resource. For example, an identification field/an information field used to indicate that the reference signal resource is used for monitoring the first object is included in the configuration information/the indication information/the trigger information of the reference signal resource. In this case, it can be considered that the configuration information/the indication information/the trigger information of the reference signal resources is included in the first signaling. The information used to instruct the first communication device to transmit the monitoring assistant information for the first object and the information used to indicate the first reference signal resource in the first signaling may be carried through the same message/information field/signaling, or may be carried through different messages/information fields/signalings. For example, the signaling used to indicate that the first reference signal resource is used for the model monitoring is configuration signaling/trigger signaling/indication signaling of the first reference signal resource, and the signaling used to instruct the first communication device to transmit the monitoring assistant information for the first object is another signaling. That is, the first signaling includes at least two signalings: configuration signaling/trigger signaling/indication signaling of reference signal resources, and signaling used to instruct the first communication device to transmit the monitoring assistant information for the first object. As another example, the first signaling is configuration signaling/trigger signaling/indication signaling of the reference signal resources, which also indicates that the reference signal resources are used for monitoring the first object, and instruct the first communication device to transmit the monitoring assistant information. That is, when the first communication device receives the first signaling, the first communication device needs to determine the monitoring assistant information for the first object using the reference signal resources, in response to the first signaling, and transmits the model monitoring assistant information for the first object.

Optionally, if the second communication device indicates that a certain reference signal resource is used for monitoring the first object, the monitoring assistant information for the first object should be included in the CSI feedback corresponding to the certain reference signal resource when the first communication device performs the CSI feedback. Optionally, if the second communication device indicates that a certain reference resource is used for monitoring the first object, the second communication device triggers the first communication device to receive the reference signal corresponding to the reference signal resource, which means that the second communication device transmits a monitoring signaling of the first object to the first communication device, the signaling triggers the first communication device to report a CSI for monitoring the first object, that is, the CSI is the monitoring assistant information for the first object.

The first signaling includes information indicating the time corresponding to the monitoring assistant information for the first object, and information of the time includes one or more of the following:
time information of determining the monitoring assistant information for the first object;
time information of monitoring the reference signal corresponding to the monitoring assistant information for the first object.

Optionally, the information of the time also includes one or more of the following:
starting time of the monitoring assistant information for the first object;
ending time of the monitoring assistant information for the first object;
a duration of the monitoring assistant information for the first object;
effective time of the first signaling.

Specifically, the first communication device determines, based on the information of the time, the starting time of obtaining the monitoring assistant information for the first object, that is, the first communication device determines, based on the information of the time, when to start obtaining the monitoring assistant information. The first communication device determines, based on the information of the time, the ending time of obtaining the monitoring assistant information for the first object, that is, the first communication device determines the ending time of obtaining the monitoring assistant information based on the information of the time, and obtains the monitoring assistant information before the ending time, the monitoring assistant information will no longer be obtained after the ending time. The first communication device determines a duration of obtaining the monitoring assistant information for the first object based on the information of the time, and obtains the monitoring assistant information within the duration. The first communication device determines the effective time of the signaling of the monitoring assistant information for the first object based on the information of the time.

Optionally, in this embodiment, the information instructing the first communication device to transmit the monitoring assistant information for the first object and the information indicating the time corresponding to transmitting the monitoring assistant information for the first object can be transmitted through the same message/information field/signaling. It can also be carried through different messages/information fields/signalings.

Optionally, the first signaling includes information instructing the first communication device to determine a time domain resource of the monitoring assistant information for the first object, and the first communication device determines the time domain resource of the monitoring assistant information for the first object based on the first signaling. The information instructing the first communication device to transmit the monitoring assistant information for the first object and the information indicating determining the time domain resource corresponding to the monitoring assistant information for the first object may be carried through the same message/information field/signaling, or may be carried through different messages/information fields/signalings.

Optionally, the first signaling includes information instructing the first communication device to determine the time-frequency resources of the monitoring assistant information for the first object, and the first communication device determines, based on the first signaling, the time-frequency resources of the monitoring assistant information for the first object. The information instructing the first communication device to transmit the monitoring assistant information for the first object and the information indicating determining the time-frequency resource corresponding to the monitoring assistant information for the first object may be carried in the same message/information field/signaling, or may be carried in different messages/information fields/signalings.

Optionally, the first signaling includes information instructing the first communication device to determine a period of the monitoring assistant information for the first object, and the first communication device determines the period of the monitoring assistant information for the first object based on the first signaling, and obtains the monitoring assistant information for the first object according to the period. The information instructing the first communication device to transmit the monitoring assistant information for the first object and the information indicating determining the period corresponding to the monitoring assistant information for the first object may be carried in the same message/information field/signaling, or may be carried in different messages/information fields/signalings.

Optionally, the first signaling includes information indicating the transmission occasion in which the first communication device transmits the monitoring assistant information for the first object, the first communication device determines, based on the first signaling, the transmission occasion in which the monitoring assistant information for the first object is transmitted, and transmits the monitoring assistant information for the first object according to the transmission occasion. The information instructing the first communication device to transmit the monitoring assistant information for the first object and the information indicating the transmission occasion corresponding to transmission of the monitoring assistant information for the first object may be carried in the same message/information field/signaling, or may be carried in different messages/information fields/signalings.

Optionally, the first signaling includes information indicating the time domain resources through which the first communication device transmits the monitoring assistant information for the first object, and the first communication device determines, based on the first signaling, the time domain resource of transmitting the monitoring assistant information for the first object, and the first communication device transmits the monitoring assistant information for the first object using the time domain resource. The information instructing the first communication device to transmit the monitoring assistant information for the first object and the information indicating the time domain resource corresponding to transmission of the monitoring assistant information for the first object may be carried in the same message/information field/signaling, or may be carried in different messages/information fields/signalings.

Optionally, the first signaling includes information indicating the period of transmitting the monitoring assistant information for the first object by the first communication device, and the first communication device determines the period of transmitting the monitoring assistant information for the first object based on the first signaling, and transmits the monitoring assistant information for the first object according to the period. The information instructing the first communication device to transmit the monitoring assistant information for the first object and the information indicating the period corresponding to transmission of the monitoring assistant information for the first object may be carried in the same message/information field/signaling, or may be carried in different messages/information fields/signalings.

Optionally, the first signaling includes information indicating the transmission position and/or the channel corresponding to the monitoring assistant information for the first object, and the first communication device determines, based on the first signaling, the transmission position and/or the channel for transmitting the monitoring assistant information for the first object, and transmits the monitoring assistant information for the first object at the transmission position and/or the channel. The information instructing the first communication device to transmit the monitoring assistant information for the first object and the information indicating the transmission position and/or the channel corresponding to transmission of the monitoring assistant information for the first object may be carried in the same message/information field/signaling, or may be carried in different messages /information fields /signalings.

Optionally, the first signaling includes information instructing the first communication device to transmit a CSI report corresponding to the monitoring assistant information for the first object, and the CSI report may carry the monitoring assistant information for the first object. The CSI report is a CSI report dedicated to monitoring of the first object; and/or the CSI report includes an information field used to indicate the monitoring assistant information for the first object. Specifically, the second communication device may configure a special CSI configuration/CSI report configuration for the monitoring assistant information for the first object. That is, there is a type of CSI report specifically used to carry monitoring assistant information for the first object; or, there is a type of CSI report specifically used to determine the monitoring assistant information for the first object. For example, the configuration information/indication information/trigger information of the CSI report includes information indicating that the CSI report corresponds to monitoring of the first object; or, the configuration information/instruction information/trigger information of the CSI report includes an identification field/an information field used to indicate the monitoring assistant information for the first object. In this case, it can be considered that the first signaling includes the configuration information/instruction information/trigger information of the CSI report.

Optionally, the first signaling includes information instructing the first communication device to transmit a CSI for monitoring the first object, and the first communication device transmits the CSI for monitoring the first object based on the first signaling.. For example, the current CSI feedback method for normal communication is a codebook-based CSI feedback method. The first signaling instructing the first communication device to transmit the CSI based on the AI/ML model is equivalent to instructing the first communication device to transmit a CSI for model monitoring. The first communication device can know that the second communication device will monitor the performance of the CSI based on the AI/ML model.

Optionally, the first signaling includes information related to the CSI report, and the first communication device uses the information related to the CSI report to determine the monitoring assistant information for the first object. The information related to the CSI report includes one or more of the following: content included in the CSI report; a format of the CSI report; and a feedback method of the CSI included in the CSI report. The format of the CSI report includes one or more of a coding method and an information field of the CSI report. The first communication device may determine the format of the CSI report according to the first signaling, and transmit the CSI report based on the format. The CSI feedback method of the CSI may include: a functional CSI feedback method, for example, a CSI feedback method based on AI/ML model, a codebook-based CSI feedback method, a feedback method based on CSI compression, a feedback method based on CSI prediction, etc. The CSI feedback method may also include a CSI feedback method of a specific model, for example, the first signaling indicates CSI feedback based on the first AI/ML model. For example, the first signaling instructs the first communication device to feed back N CSIs, or to feed back one CSI. In addition, the first signaling may also instruct the first communication device to feed back a CSI based on the AI/ML model, and/or the first signaling may instruct the first communication device to feed back a high-precision CSI (for example, a ground truth CSI, a CSI based on a high-precision codebook, and a CSI with more quantification bit numbers), and/or the first signaling instructs the first communication device to feed back a codebook-based CSI.

Optionally, the first signaling includes information indicating a CSI determination method and/or a CSI feedback method of a CSI for monitoring the first object, and the first communication device determines, based on the first signaling, the CSI determination method and/or the CSI feedback method for monitoring the first object, and determines, according to the determination method, the CSI for monitoring the first object and/or transmits the CSI for monitoring the first object to the second communication device according to the feedback method; wherein the CSI for monitoring the first object includes the monitoring assistant information and is transmitted from the first communication device to the second communication device.

Optionally, the first signaling includes information indicating the content and/or the format included in the monitoring assistant information for the first object, and the first communication device determines, based on the first signaling, the content and/or the format included in the monitoring assistant information for the first object. The first communication device may transmit the monitoring assistant information for the first object with the content included in the monitoring assistant information, or the first communication device may transmit the monitoring assistant information of the first monitoring object according to the format. The format includes one or more of an encoding method and an information field of the monitoring assistant information.

Optionally, the first signaling includes information indicating an activated model. Based on the first signaling, the first communication device may activate/enable the first AI/ML model to instruct the first communication device to determine/transmit the monitoring assistant information of the first AI/ML model. That is, in response to activating/enabling the first AI/ML model, the first communication device determines/transmits model monitoring assistant information of the first AI/ML model.

Optionally, the first signaling includes one or more of the following: Radio Resource Control (RRC) signaling; Medium Access Control Control Element (MAC CE) signaling; Downlink Control Information (DCI) signaling. The same signaling is used to indicate one or more items of the above indication information included in the first signaling. At least two pieces of the above indication information are indicated by using different signalings, for example, one piece of indication information is indicated through MAC CE, and another piece of indication information is indicated through RRC; or one piece of indication information is indicated through one MAC CE, and another piece of indication information is indicated through another one MAC CE; or one piece of indication information is indicated through one RRC parameter, another piece of indication information is indicated through another RRC parameter, etc.

As an optional implementation, the implementation of the present disclosure can be applicable to the scenario where N>=1 models, that is, a message is used to instruct the UE to determine/transmit the model monitoring assistant information of one model (N=1), or the first signaling instructs the first communication device to determine/transmit the model monitoring assistant information of multiple models (N>1). The model may be one AI/ML model or multiple AI/ML models. The first signaling may be for a certain AI/ML model, for example, the first signaling instructs the first communication device to determine/transmit the monitoring assistant information of the first AI/ML model; or the first signaling may be also for a certain function, for example, the first signaling instructs the first communication device to determine/transmit the monitoring assistant information of CSI feedback based on AI/ML; or, the first signaling may also be for a certain scenario, for example, the first signaling instructs the UE to determine/transmit the monitoring assistant information of CSI feedback based on the AI/ML model in a certain scenario.

As an optional implementation, the monitoring assistant information includes one or more of the following:
identifier (ID) information;
channel state information (CSI);
one or more measurement metrics;
information used to indicate a first performance metric.

The ID information includes one or more of the following: a model ID, a functionality ID, and a scenario type. The model ID, the functionality ID and the scenario type are the same as those in the above embodiment, and will not be described in detail in this embodiment. The above-mentioned monitoring assistant information is configured to indicate that the monitoring assistant information transmitted from the first communication device is the monitoring assistant information of a specific model/function/service scenario. The second communication device determines the corresponding AI/ML model and/or function and/or service scenario based on the monitoring assistant information.

Optionally, the CSI includes one or more of the following:
CSI corresponding to at least one model;
non-model-based CSI;
precoding matrix information;
rank information;
channel quality indicator (CQI).

The CSI corresponding to at least one model may be the CSI corresponding to one or more AI/ML models. The non-model-based CSI includes the codebook-based CSI, the high-precision CSI, etc. The CSI may also include: precoding matrix information, such as PMI (Precoding Matrix Indicator), rank information, such as RI (Rank Indicator), and Channel Quality Indicator (CQI), etc.

For example, the first communication device transmits information indicating a reference signal resource identifier (such as ID) and/or a CSI report identifier (CSI configuration ID, CSI report ID, etc.) and/or a CSI feedback method corresponding to the CSI to the second communication device. The second communication device determines the AI/ML model and/or the CSI feedback method corresponding to the monitoring assistant information based on the information.

Optionally, the first performance metric includes one or more of the following:
a performance metric corresponding to the first object;
accuracy index;
a system performance metric;
indexes corresponding to distribution;
performance metrics of layer 1 or layer 3.

The performance metric corresponding to the first object may be the performance metric corresponding to the AI/ML model, or the performance metric corresponding to the CSI determination method and/or the CSI feedback method, the performance metric corresponding to the positioning method, and the performance metric corresponding to a beam management method, etc. The accuracy index can include one or more of: squared generalized cosine similarity (SGCS), generalized cosine similarity (GCS), normalized Mean Squared Error (NMSE), Mean Squared Error (MSE), etc. Optionally, when the first object includes the positioning, the accuracy index may include one or more of following: a positioning position error, a time error, an angle error, LOS (line of sight)/NLOS (not line of sight) recognition accuracy, etc. The system performance metric can include one or more of BLER (Block Error Rate), throughput, hypothetical BLER, hypothetical throughput, Acknowledgement (ACK), Negative Acknowledgment (NACK), etc. The index corresponding to the distribution may include one or more of a mean, a mean square error, a distance, etc. The first performance metric may also be a performance metric of layer 1 (physical layer), a performance metric of layer 3, etc. (a performance metric obtained by averaging multiple layer-1 performance metrics or performing filtering or other processing). The first performance metric may also include other performance metrics: for example, one or more of Reference Signal Received Power (RSRP), Reference Signal Received Quality (RSRQ), noise and interference ratio (SINR), etc.

Optionally, one calculation method of the hypothetical BLER is: obtaining the RSRP/SINR corresponding to the CSI and mapping the RSRP/SINR to the hypothetical BLER. One calculation method of the hypothetical throughput is: obtaining the RSRP/SINR corresponding to the CSI and mapping the RSRP/SINR to the hypothetical throughput. For example, the Shannon's formula is used to calculate the throughput corresponding to the RSRP/SINR corresponding to the CSI.

Optionally, the one or more measurement metrics include one or more of the following:
position-related information;
information related to one or more time measurement metrics;
one or more angle measurement metrics
one or more beam measurement metrics;
one or more beam quality measurement metrics;
one or more channel quality measurement metrics.

The one or more measurement metrics may be one or more measurement metrics corresponding to one or more AI/ML models, or the one or more measurement metrics may be non-AI/ML model-based measurement metrics. For example, the first communication device transmits information indicating a reference signal resource identifier (e.g., ID) corresponding to the one or more measurement metrics. The second communication device determines the AI/ML model and/or positioning feedback method corresponding to the monitoring assistant information based on the information.

Optionally, the monitoring assistant information includes the CSI, the first signaling includes the information configured to indicate the feedback method of the CSI, and the step 302 of receiving the monitoring assistant information for the first object transmitted from the first communication device includes: receiving, from the first communication device, the CSI transmitted based on the CSI feedback method indicated by the first signaling.

For example, the first signaling instructs the first communication device to perform CSI feedback based on the AI/ML model, and the first communication device performs CSI feedback based on the AI/ML model, and the second communication device receives the CSI feedback based on the AI/ML model; the first signaling instructs the first communication device to perform codebook-based CSI feedback, the second communication device receives the codebook-based CSI feedback; and the first communication device performs the codebook-based CSI feedback, the second communication device receives the codebook-based CSI feedback.

Optionally, the monitoring assistant information includes the one or more measurement metrics, the first signaling instructs the first communication device to transmit positioning monitoring assistant information based on the AI/ML model, and the first communication device can know that the second communication device will perform the performance monitoring based on positioning of AI/ML models; after receiving the monitoring assistant information, the second communication device will perform the performance monitoring based on the positioning of the AI/ML model.

Optionally, the monitoring assistant information includes the CSI, the CSI includes a first CSI obtained based on a model, and the first CSI includes at least one CSI.

Optionally, each CSI of the plurality of CSIs included in the first CSI corresponds to a model, or any two CSIs of the plurality of CSIs included in the first CSI are CSIs obtained based on different models;
the plurality of CSIs included in the first CSI correspond to the same channel;
the plurality of CSIs included in the first CSI correspond to the same reference signal;
the plurality of CSIs included in the first CSI correspond to the same reference signal resource;
the plurality of CSIs included in the first CSI are not received at the same time, or the plurality of CSIs included in the first CSI are received at the same time;
the plurality of CSIs included in the first CSI are received in the same uplink control information UCI, or the plurality of CSIs included in the first CSI are received in multiple UCIs;
the plurality of CSIs included in the first CSI are received on the same channel, or the plurality of CSIs included in the first CSI are received on multiple channels.

For example, the first CSI includes two CSIs. The second communication device receives the first CSI and the second CSI. The first CSI is the CSI obtained based on the first AI/ML model, and the second CSI is the CSI obtained based on the second AI /ML model; or, the second communication device receives the first CSI and the second CSI, the first CSI is the CSI obtained based on the first AI/ML model, and the second CSI is the CSI obtained based on the codebook. The second communication device receives the first CSI and the second CSI, where the first CSI is CSI obtained based on the first AI/ML model, and the second CSI is the high-precision CSI.

For example, the first CSI includes three CSIs. The second communication device receives the first CSI, the second CSI and the third CSI. The first CSI is the CSI obtained based on the first AI/ML model, and the second CSI is the CSI obtained based on the second AI/ML model, and the third CSI is the CSI obtained based on the codebook.

Optionally, the CSI report received by the second communication device may include part of the information in the plurality of CSIs. For example, only the first CSI is included, or the CSI report received by the second communication device may include the first CSI and the second CSI.

Optionally, the monitoring assistant information includes the CSI, and the receiving the monitoring assistant information for the first object from the first communication device includes periodically receiving the CSI.

Specifically, the first communication device periodically transmits a CSI/CSI report for monitoring of the model/CSI feedback method, according to the period of the model/CSI feedback method indicated by the first signaling; the second communication device periodically receives the CSI/CSI report for monitoring of the model/CSI feedback method, according to the period. Optionally, the second communication device monitors the model/CSI feedback method based on the CSI/CSI report.

In the embodiments of the present disclosure, the method of triggering, by the second communication device, the first communication device to transmit the monitoring assistant information for the first object, so that the second communication device can obtain the monitoring assistant information from the first communication device for use by monitoring at the second communication device, and the second communication device can use more information and methods for monitoring, which improves the flexibility of monitoring and enables better monitoring performance.

Referring to Fig. 4. Fig. 4 is a structural diagram of a first communication device provided by some embodiments of the present disclosure. The first communication device includes: a memory 420, a transceiver 400 and a processor 410, where, the memory 420 is configured to store computer programs; the transceiver 400 is configured to transmit and receive data under the control of the processor 410; the processor 410 is configured to read the computer programs in the memory and perform the following operations:
receiving a first signaling transmitted from a second communication device;
transmitting monitoring assistant information for a first object based on the first signaling.

The first object includes one or more of the following:
a model;
a Channel state information (CSI) determination method and/or a CSI feedback method;
a positioning method;
a beam management method.

In Fig. 4, the bus architecture may include any number of interconnected buses and bridges, specifically various circuits including one or more processors represented by the processor 410 and a memory represented by the memory 420 are linked together. The bus architecture can also link together various other circuits such as peripherals, voltage regulators, and power management circuits, which are all well known in the art and therefore will not be described further herein. The bus interface provides the interface. The transceiver 400 may be a plurality of elements, including a transmitter and a receiver, providing a unit for communicating with various other devices over transmission media. The transmission media include wireless channels, wired channels, optical cables, etc.

The processor 410 is responsible for managing the bus architecture and general processing, and the memory 420 can store data used by the processor 400 when performing operations.

Optionally, the processor 410 may be a CPU (a central processing unit), ASIC (Application Specific Integrated Circuit), FPGA (Field-Programmable Gate Array) or CPLD (Complex Programmable Logic Device), the processor can also adopt a multi-core architecture.

The processor is configured to execute any of the methods provided by the embodiments of the present disclosure according to the obtained executable instructions by calling the computer programs stored in the memory. The processor and the memory can also be physically separated.

Optionally, the first signaling includes one or more of the following indication information:
information instructing the first communication device to transmit or determine the monitoring assistant information for the first object;
information indicating an identifier ID related to the first object;
information indicating reference signal resources corresponding to the monitoring assistant information for the first object;
information indicating time corresponding to the monitoring assistant information for the first object;
information instructing the first communication device to determine a time domain resource of the monitoring assistant information for the first object;
information instructing the first communication device to determine time-frequency resources of the monitoring assistant information for the first object;
information instructing the first communication device to determine a period of the monitoring assistant information for the first object;
information indicating a transmission occasion in which the first communication device transmits the monitoring assistant information for the first object;
information instructing a time domain resource used by the first communication device to transmit the monitoring assistant information for the first object;
information indicating a period in which the first communication device transmits the monitoring assistant information for the first object;
information indicating a transmission position and/or a channel corresponding to the monitoring assistant information for the first object;
information instructing the first communication device to transmit a CSI report corresponding to the monitoring assistant information for the first object;
information instructing the first communication device to transmit CSI used for monitoring the first object;
information indicating CSI-report related information;
information indicating a determination method and/or a feedback method of CSI used for monitoring of the first object;
information indicating content and/or format included in the monitoring assistant information for the first object;
information indicating an activated model.

The information related to the CSI report includes one or more of the following:
content included in the CSI report;
a format of the CSI report; and
a feedback method of the CSI included in the CSI report.

Optionally, the information indicating the ID includes one or more of the following:
a model ID;
a functionality ID;
a scenario type.

The functionality ID is used to indicate an ID of one or more of the following functionalities:
CSI compression feedback;
CSI prediction;
positioning;
beam management;
resource scheduling.

Optionally, information of the time includes one or more of the following:
time information of determining the monitoring assistant information for the first object;
time information of monitoring the reference signal corresponding to the monitoring assistant information for the first object.

Optionally, the information of the time also includes one or more of the following:
starting time of the monitoring assistant information for the first object;
ending time of the monitoring assistant information for the first object;
a duration of the monitoring assistant information for the first object;
effective time of the first signaling.

Optionally, the monitoring assistant information includes one or more of the following:
identifier (ID) information;
channel state information (CSI);
one or more measurement metrics;
information used to indicate a first performance metric.

Optionally, the ID information includes one or more of the following:
a model ID,
a functionality ID, and
a scenario type.

Optionally, the CSI includes one or more of the following:
CSI corresponding to at least one model;
non-model-based CSI;
precoding matrix information;
rank information;
channel quality indicator (CQI).

Optionally, the first performance metric includes one or more of the following:
a performance metric corresponding to the first object;
accuracy index;
a system performance metric;
indexes corresponding to distribution;
performance metrics of layer 1 or layer 3.

Optionally, the one or more measurement metrics include one or more of the following:
position-related information;
information related to one or more time measurement metrics;
one or more angle measurement metrics
one or more beam measurement metrics;
one or more beam quality measurement metrics;
one or more channel quality measurement metrics.

Optionally, the CSI feedback method includes one or more of the following: a model-based CSI feedback method and a codebook-based CSI feedback method; and/or, the CSI determination method includes one or more of the following: a model-based CSI determination method; a codebook-based CSI determination method.

Optionally, the CSI determination method is used for one or more of the following:
CSI compression, and

CSI prediction.

Optionally, the CSI report comprises the monitoring assistant information for the first object; wherein, the CSI report is a CSI report used for monitoring the first object; and/or, the CSI report includes an information field configured to indicate the monitoring assistant information for the first object.

Optionally, transmitting the monitoring assistant information for the first object based on the first signaling performed by the processor 410 includes any of the following:
transmitting the monitoring assistant information for the first object in response to the first signaling;
determining the monitoring assistant information for the first object based on the first signaling, and transmitting the determined monitoring assistant information for the first object;
determining a transmitting method of the monitoring assistant information for the first object based on the first signaling, and transmitting the monitoring assistant information for the first object based on the transmitting method.

Optionally, the monitoring assistant information includes the CSI, the first signaling includes information indicating the feedback method of the CSI, wherein transmitting the monitoring assistant information for the first object based on the first signaling includes transmitting the CSI based on the feedback method of the CSI indicated by the first signaling.

Optionally, the monitoring assistant information includes the CSI, the CSI includes a first CSI obtained based on a model, and the first CSI includes at least one CSI.

Optionally, each CSI of the plurality of CSIs included in the first CSI corresponds to a model, or any two CSIs of the plurality of CSIs included in the first CSI are CSIs obtained based on different models;
the plurality of CSIs included in the first CSI correspond to the same channel;
the plurality of CSIs included in the first CSI correspond to the same reference signal;
the plurality of CSIs included in the first CSI correspond to the same reference signal resource;
the plurality of CSIs included in the first CSI are not transmitted at the same time, or the plurality of CSIs included in the first CSI are transmitted at the same time;
the plurality of CSIs included in the first CSI are transmitted in the same uplink control information UCI, or the plurality of CSIs included in the first CSI are transmitted in multiple UCIs;
the plurality of CSIs included in the first CSI are transmitted on the same channel, or the plurality of CSIs included in the first CSI are transmitted on multiple channels.

Optionally, the monitoring assistant information includes the CSI, and the transmitting the monitoring assistant information for the first object based on the first signaling includes any of the following:
determining, based on the first signaling, the transmitting time of the CSI for monitoring the first object, and transmitting the CSI at the transmitting time;
determining a period of monitoring the first object based on the first signaling, and transmitting the CSI according to the period.

Optionally, the first communication device includes a terminal, and the second communication device includes a base station or a third communication device; or, the first communication device includes a base station, and the second communication device includes a third communication device or terminal; wherein, the third communication device is a device different from the base station and the terminal.

It should be noted here that the above-mentioned first communication device provided by the embodiment of the present disclosure can implement all the method steps implemented by the above-mentioned method embodiment, and can achieve the same technical effect. The same parts and beneficial effects between the embodiment and the previous method embodiment will not be described in detail again.

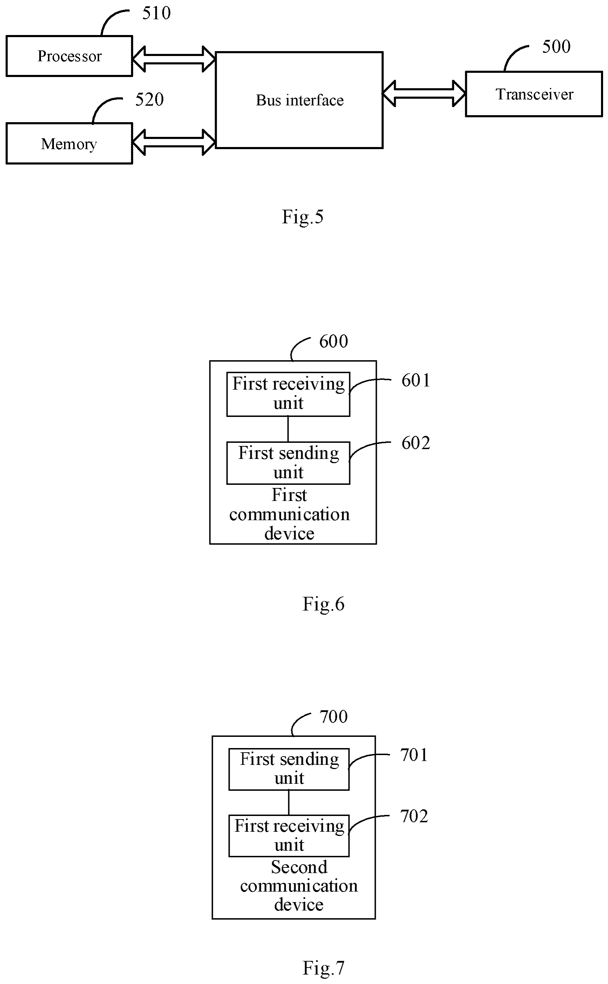

Referring to Fig. 5. Fig. 5 is a structural diagram of a second communication device provided by some embodiments of the present disclosure. The second communication device includes: a memory 520, a transceiver 500 and a processor 510, where, the memory 520 is configured to store computer programs; the transceiver 500 is configured to transmit and receive data under the control of the processor 510; the processor 510 is used to read the computer program in the memory and perform the following operations:
transmitting a first signaling to the first communication device;
receiving the monitoring assistant information for the first object transmitted from the first communication device;

The first object includes one or more of the following:
a model;
a Channel state information (CSI) determination method;
a CSI feedback method;
a positioning method;
a beam management method.

In Fig. 5, a bus architecture may include any number of interconnected buses and bridges, specifically various circuits such as one or more processors represented by the processor 510 and a memory represented by the memory 520 are linked together. The bus architecture can also link together various other circuits such as peripherals, voltage regulators, and power management circuits, which are all well known in the art and therefore will not be described further herein. The bus interface provides the interface. The transceiver 500 may be a plurality of elements, including a transmitter and a receiver, providing a unit for communicating with various other devices over transmission media. The transmission media include wireless channels, wired channels, optical cables, etc.

The processor 510 is responsible for managing the bus architecture and general processing, and the memory 520 can store data used by the processor 500 when performing operations.

Optionally, the processor 510 can be a CPU (a central processing unit), ASIC (Application Specific Integrated Circuit), FPGA (Field-Programmable Gate Array) or CPLD (Complex Programmable Logic Device), the processor can also adopt a multi-core architecture.

Optionally, processor 510 is further configured to read the computer program in the memory and perform following: monitoring the first object based on the monitoring assistant information.

Optionally, monitoring the first object based on the monitoring assistant information includes: evaluating the performance of the first object based on the monitoring assistant information.

Optionally, the first signaling includes one or more of the following indication information:
information instructing the first communication device to transmit or determine the monitoring assistant information for the first object;
information indicating an identifier ID related to the first object;
information indicating reference signal resources corresponding to the monitoring assistant information for the first object;
information indicating time corresponding to the monitoring assistant information for the first object;
information instructing the first communication device to determine a time domain resource of the monitoring assistant information for the first object;
information instructing the first communication device to determine time-frequency resources of the monitoring assistant information for the first object;
information instructing the first communication device to determine a period of the monitoring assistant information for the first object;
information indicating a transmission occasion in which the first communication device transmits the monitoring assistant information for the first object;
information instructing a time domain resource used by the first communication device to transmit the monitoring assistant information for the first object;
information indicating a period in which the first communication device transmits the monitoring assistant information for the first object;
information indicating a transmission position and/or a channel corresponding to the monitoring assistant information for the first object;
information instructing the first communication device to transmit a CSI report corresponding to the monitoring assistant information for the first object;
information instructing the first communication device to transmit CSI used for monitoring the first object;
information indicating CSI-report related information;
information indicating a determination method and/or a feedback method of CSI used for monitoring of the first object;
information indicating content and/or format included in the monitoring assistant information for the first object;
information indicating an activated model.

Optionally, the information related to the CSI report includes one or more of the following:
content included in the CSI report;
a format of the CSI report; and
a feedback method of the CSI included in the CSI report.

Optionally, the information indicating the ID includes one or more of the following:
a model ID;
a functionality ID;
a scenario type.

The functionality ID is used to indicate an ID of one or more of the following functionalities:
CSI compression feedback;
CSI prediction;
positioning;
beam management;
resource scheduling.

Optionally, information of the time includes one or more of the following:
time information of determining the monitoring assistant information for the first object;
time information of monitoring the reference signal corresponding to the monitoring assistant information for the first object.

Optionally, the information of the time also includes one or more of the following:
starting time of the monitoring assistant information for the first object;
ending time of the monitoring assistant information for the first object;
a duration of the monitoring assistant information for the first object;
effective time of the first signaling.

Optionally, the monitoring assistant information includes one or more of the following:
identifier (ID) information;
channel state information (CSI);
one or more measurement metrics;
information used to indicate a first performance metric.

Optionally, the ID information includes one or more of the following:
a model ID,
a functionality ID, and
a scenario type.

Optionally, the CSI includes one or more of the following:
CSI corresponding to at least one model;
non-model-based CSI;
precoding matrix information;
rank information;
channel quality indicator (CQI).

Optionally, the first performance metric includes one or more of the following:
a performance metric corresponding to the first object;
accuracy index;
a system performance metric;
indexes corresponding to distribution;
performance metrics of layer 1 or layer 3.

Optionally, the one or more measurement metrics include one or more of the following:
position-related information;
information related to one or more time measurement metrics;
one or more angle measurement metrics
one or more beam measurement metrics;
one or more beam quality measurement metrics;
one or more channel quality measurement metrics.

Optionally, the CSI feedback method includes one or more of the following: a model-based CSI feedback method and a codebook-based CSI feedback method; and/or, the CSI determination method includes one or more of the following: a model-based CSI determination method; a codebook-based CSI determination method.

Optionally, the CSI determination method is used for one or more of the following:
CSI compression, and
CSI prediction.

Optionally, the CSI report comprises the monitoring assistant information for the first object; wherein, the CSI report is a CSI report used for monitoring the first object; and/or, the CSI report includes an information field configured to indicate the monitoring assistant information for the first object.

Optionally, the monitoring assistant information includes CSI, and the first signaling includes information indicating a feedback method of the CSI. Receiving the monitoring assistant information for the first object from the first communication device includes:
receiving the CSI transmitted from the first communication device based on the CSI feedback method indicated by the first signaling.

Optionally, the monitoring assistant information includes the CSI, the CSI includes a first CSI obtained based on a model, and the first CSI includes at least one CSI.

Optionally, each CSI of the plurality of CSIs included in the first CSI corresponds to a model, or any two CSIs of the plurality of CSIs included in the first CSI are CSIs obtained based on different models;
the plurality of CSIs included in the first CSI correspond to the same channel;
the plurality of CSIs included in the first CSI correspond to the same reference signal;
the plurality of CSIs included in the first CSI correspond to the same reference signal resource;
the plurality of CSIs included in the first CSI are not received at the same time, or the plurality of CSIs included in the first CSI are received at the same time;
the plurality of CSIs included in the first CSI are received in the same uplink control information UCI, or the plurality of CSIs included in the first CSI are received in multiple UCIs;
the plurality of CSIs included in the first CSI are received on the same channel, or the plurality of CSIs included in the first CSI are received on multiple channels.

Optionally, the monitoring assistant information includes CSI, and the receiving the monitoring assistant information for the first object from the first communication device includes: periodically receiving the CSI.

Optionally, the first communication device includes a terminal, and the second communication device includes a base station or a third communication device; or, the first communication device includes a base station, and the second communication device includes a third communication device or terminal; wherein, the third communication device is a device different from the base station and the terminal. The processor is configured to execute any of the methods provided by the embodiments of the present disclosure according to the obtained executable instructions by calling the computer program stored in the memory. The processor and the memory can also be physically separated.

Optionally, the processor 510 is also configured to read the computer program to implement following: monitoring the first object based on the monitoring assistant information.

Optionally, monitoring the first object based on the monitoring assistant information includes: based on the monitoring assistant information, evaluating the performance of the first object.

It should be noted here that the above-mentioned second communication device provided by the embodiment of the present disclosure can implement all the method steps implemented by the above-mentioned method embodiment, and can achieve the same technical effect. The same parts and beneficial effects between the method embodiment and this embodiments will not be described in detail again.

Referring to Fig. 6. Fig. 6 is a structural diagram of a first communication device provided by some embodiments of the present disclosure. The first communication device 600 includes:
a first receiving unit 601 configured to receive a first signaling transmitted from a second communication device;
a first transmitting unit 602 configured to transmit monitoring assistant information for a first object based on the first signaling.

The first object includes one or more of the following:
a model;
a Channel state information (CSI) determination method;
a CSI feedback method;
a positioning method;
a beam management method.

Optionally, the first signaling includes one or more of the following indication information:
information instructing the first communication device to transmit or determine the monitoring assistant information for the first object;
information indicating an identifier ID related to the first object;
information indicating reference signal resources corresponding to the monitoring assistant information for the first object;
information indicating time corresponding to the monitoring assistant information for the first object;
information instructing the first communication device to determine a time domain resource of the monitoring assistant information for the first object;
information instructing the first communication device to determine time-frequency resources of the monitoring assistant information for the first object;
information instructing the first communication device to determine a period of the monitoring assistant information for the first object;
information indicating a transmission occasion in which the first communication device transmits the monitoring assistant information for the first object;
information instructing a time domain resource used by the first communication device to transmit the monitoring assistant information for the first object;
information indicating a period in which the first communication device transmits the monitoring assistant information for the first object;
information indicating a transmission position and/or a channel corresponding to the monitoring assistant information for the first object;
information instructing the first communication device to transmit a CSI report corresponding to the monitoring assistant information for the first object;
information instructing the first communication device to transmit CSI used for monitoring the first object;
information indicating CSI-report related information;
information indicating a determination method and/or a feedback method of CSI used for monitoring of the first object;
information indicating content and/or format included in the monitoring assistant information for the first object;
information indicating an activated model.

The information related to the CSI report includes one or more of the following:
content included in the CSI report;
a format of the CSI report; and
a feedback method of the CSI included in the CSI report.

Optionally, the information indicating the ID includes one or more of the following:
a model ID;
a functionality ID;
a scenario type.

The functionality ID is used to indicate an ID of one or more of the following functionalities:
CSI compression feedback;
CSI prediction;
positioning;
beam management;
resource scheduling.

Optionally, information of the time includes one or more of the following:
time information of determining the monitoring assistant information for the first object;
time information of monitoring the reference signal corresponding to the monitoring assistant information for the first object.

Optionally, the information of the time also includes one or more of the following:
starting time of the monitoring assistant information for the first object;
ending time of the monitoring assistant information for the first object;
a duration of the monitoring assistant information for the first object;
effective time of the first signaling.

Optionally, the monitoring assistant information includes one or more of the following:
identifier (ID) information;
channel state information (CSI);
one or more measurement metrics;
information used to indicate a first performance metric.

Optionally, the ID information includes one or more of the following:
a model ID,
a functionality ID, and
a scenario type.

Optionally, the CSI includes one or more of the following:
CSI corresponding to at least one model;
non-model-based CSI;
precoding matrix information;
rank information;
channel quality indicator (CQI).

Optionally, the first performance metric includes one or more of the following:
a performance metric corresponding to the first object;
accuracy index;
a system performance metric;
indexes corresponding to distribution;
performance metrics of layer 1 or layer 3.

Optionally, the one or more measurement metrics include one or more of the following:
position-related information;
information related to one or more time measurement metrics;
one or more angle measurement metrics
one or more beam measurement metrics;
one or more beam quality measurement metrics;
one or more channel quality measurement metrics.

Optionally, the CSI feedback method includes one or more of the following: a model-based CSI feedback method and a codebook-based CSI feedback method; and/or, the CSI determination method includes one or more of the following: a model-based CSI determination method; a codebook-based CSI determination method.

Optionally, the CSI determination method is configured for one or more of the following:
CSI compression, and
CSI prediction.

Optionally, the CSI report comprises the monitoring assistant information for the first object; wherein, the CSI report is a CSI report used for monitoring the first object; and/or, the CSI report includes an information field configured to indicate the monitoring assistant information for the first object.

Optionally, the first transmitting unit 602 is also configured to perform any of the following:
transmitting the monitoring assistant information for the first object in response to the first signaling;
determining the monitoring assistant information for the first object based on the first signaling, and transmitting the determined monitoring assistant information for the first object;
determining a transmitting method of the monitoring assistant information for the first object based on the first signaling, and transmitting the monitoring assistant information for the first object based on the transmitting method.

Optionally, the monitoring assistant information includes the CSI, the first signaling includes information configured to indicate the feedback method of the CSI, and transmitting the monitoring assistant information for the first object based on the first signaling includes: transmitting the CSI based on the feedback method of the CSI indicated by the first signaling.

Optionally, the monitoring assistant information includes CSI, the CSI includes a first CSI obtained based on a model, and the first CSI includes at least one CSI.

Optionally, each CSI of the plurality of CSIs included in the first CSI corresponds to a model, or any two CSIs of the plurality of CSIs included in the first CSI are CSIs obtained based on different models;
the plurality of CSIs included in the first CSI correspond to the same channel;
the plurality of CSIs included in the first CSI correspond to the same reference signal;
the plurality of CSIs included in the first CSI correspond to the same reference signal resource;
the plurality of CSIs included in the first CSI are not transmitted at the same time, or the plurality of CSIs included in the first CSI are transmitted at the same time;
the plurality of CSIs included in the first CSI are transmitted in the same uplink control information UCI, or the plurality of CSIs included in the first CSI are transmitted in multiple UCIs;
the plurality of CSIs included in the first CSI are transmitted on the same channel, or the plurality of CSIs included in the first CSI are transmitted on multiple channels.

Optionally, the monitoring assistant information includes the CSI, and the transmitting the monitoring assistant information for the first object based on the first signaling includes any of the following:
determining, based on the first signaling, the transmitting time of the CSI for monitoring the first object, and transmitting the CSI at the transmitting time;
determining a period of monitoring the first object based on the first signaling, and transmitting the CSI according to the period.

Optionally, the first communication device includes a terminal, and the second communication device includes a base station or a third communication device; or,

Optionally, the first communication device includes a terminal, and the second communication device includes a base station or a third communication device; or, the first communication device includes a base station, and the second communication device includes a third communication device or terminal; wherein, the third communication device is a device different from the base station and the terminal.

It should be noted here that the above-mentioned first communication device provided by the embodiment of the present disclosure can implement all the method steps implemented by the above-mentioned method embodiment, and can achieve the same technical effect. The same parts and beneficial effects between the embodiment and the previous method embodiment will not be described in detail again.

Referring to Fig. 7. Fig. 7 is a structural diagram of a second communication device provided by some embodiments of the present disclosure. The second communication device 700 includes:
a first transmitting unit 701 configured to transmit a first signaling to the first communication device;
a first receiving unit 702 configured to receive the monitoring assistant information for the first object transmitted from the first communication device.

The first object includes one or more of the following:
a model;
a Channel state information (CSI) determination method;
a CSI feedback method;
a positioning method;
a beam management method.

Optionally, the second communication device further includes:
a monitoring unit configured to monitor the first object based on the monitoring assistant information.

Optionally, the monitoring unit is specifically configured to evaluate the performance of the first object based on the monitoring assistant information.

Optionally, the first signaling includes one or more of the following indication information:
information instructing the first communication device to transmit or determine the monitoring assistant information for the first object;
information indicating an identifier ID related to the first object;
information indicating reference signal resources corresponding to the monitoring assistant information for the first object;
information indicating time corresponding to the monitoring assistant information for the first object;
information instructing the first communication device to determine a time domain resource of the monitoring assistant information for the first object;
information instructing the first communication device to determine time-frequency resources of the monitoring assistant information for the first object;
information instructing the first communication device to determine a period of the monitoring assistant information for the first object;
information indicating a transmission occasion in which the first communication device transmits the monitoring assistant information for the first object;
information instructing a time domain resource used by the first communication device to transmit the monitoring assistant information for the first object;
information indicating a period in which the first communication device transmits the monitoring assistant information for the first object;
information indicating a transmission position and/or a channel corresponding to the monitoring assistant information for the first object;
information instructing the first communication device to transmit a CSI report corresponding to the monitoring assistant information for the first object;
information instructing the first communication device to transmit CSI used for monitoring the first object;
information indicating CSI-report related information;
information indicating a determination method and/or a feedback method of CSI used for monitoring of the first object;
information indicating content and/or format included in the monitoring assistant information for the first object;
information indicating an activated model.

Optionally, the information related to the CSI report includes one or more of the following:
content included in the CSI report;
a format of the CSI report; and a feedback method of the CSI included in the CSI report.

Optionally, the information indicating the ID includes one or more of the following:
a model ID;
a functionality ID;
a scenario type.

The functionality ID is used to indicate an ID of one or more of the following functionalities:
CSI compression feedback;
CSI prediction;
positioning;
beam management;
resource scheduling.

Optionally, information of the time includes one or more of the following:
time information of determining the monitoring assistant information for the first object;
time information of monitoring the reference signal corresponding to the monitoring assistant information for the first object.

Optionally, the information of the time also includes one or more of the following:
starting time of the monitoring assistant information for the first object;
ending time of the monitoring assistant information for the first object;
a duration of the monitoring assistant information for the first object;
effective time of the first signaling.

Optionally, the monitoring assistant information includes one or more of the following:
identifier (ID) information;
channel state information (CSI);
one or more measurement metrics;
information used to indicate a first performance metric.

Optionally, the ID information includes one or more of the following:
a model ID,
a functionality ID, and
a scenario type.

Optionally, the CSI includes one or more of the following:
CSI corresponding to at least one model;
non-model-based CSI;
precoding matrix information;
rank information;
channel quality indicator (CQI).

Optionally, the first performance metric includes one or more of the following:
a performance metric corresponding to the first object;
accuracy index;
a system performance metric;
indexes corresponding to distribution;
performance metrics of layer 1 or layer 3.

Optionally, the one or more measurement metrics include one or more of the following:
position-related information;
information related to one or more time measurement metrics;
one or more angle measurement metrics
one or more beam measurement metrics;
one or more beam quality measurement metrics;
one or more channel quality measurement metrics.

Optionally, the CSI feedback method includes one or more of the following: a model-based CSI feedback method and a codebook-based CSI feedback method; and/or, the CSI determination method includes one or more of the following: a model-based CSI determination method; a codebook-based CSI determination method.

Optionally, the CSI determination method is used for one or more of the following:
CSI compression, and
CSI prediction.

Optionally, the CSI report comprises the monitoring assistant information for the first object; wherein, the CSI report is a CSI report used for monitoring the first object; and/or, the CSI report includes an information field configured to indicate the monitoring assistant information for the first object.

Optionally, the monitoring assistant information includes CSI, and the first signaling includes information indicating a feedback method of the CSI. Receiving the monitoring assistant information for the first object from the first communication device includes:
receiving the CSI transmitted from the first communication device based on the CSI feedback method indicated by the first signaling.

Optionally, the monitoring assistant information includes the CSI, the CSI includes a first CSI obtained based on a model, and the first CSI includes at least one CSI.

Optionally, each CSI of the plurality of CSIs included in the first CSI corresponds to a model, or any two CSIs of the plurality of CSIs included in the first CSI are CSIs obtained based on different models;
the plurality of CSIs included in the first CSI correspond to the same channel;
the plurality of CSIs included in the first CSI correspond to the same reference signal;
the plurality of CSIs included in the first CSI correspond to the same reference signal resource;
the plurality of CSIs included in the first CSI are not received at the same time, or the plurality of CSIs included in the first CSI are received at the same time;
the plurality of CSIs included in the first CSI are received in the same uplink control information UCI, or the plurality of CSIs included in the first CSI are received in multiple UCIs;
the plurality of CSIs included in the first CSI are received on the same channel, or the plurality of CSIs included in the first CSI are received on multiple channels.

Optionally, the monitoring assistant information includes CSI, and the receiving the monitoring assistant information for the first object from the first communication device includes: periodically receiving the CSI.

Optionally, the first communication device includes a terminal, and the second communication device includes a base station or a third communication device; or, the first communication device includes a base station, and the second communication device includes a third communication device or terminal; wherein, the third communication device is a device different from the base station and the terminal.

It should be noted here that the above-mentioned second communication device provided by the embodiment of the present disclosure can implement all the method steps implemented by the above-mentioned method embodiment, and can achieve the same technical effect. The same parts and beneficial effects between the method embodiment and this embodiments will not be described in detail again.

It should be noted that the division of units in the embodiment of the present disclosure is schematic and is only a logical function division. In actual implementation, there may be other division methods. In addition, each functional unit in each embodiment of the present disclosure can be integrated into one processing unit, each unit can exist physically alone, or two or more units can be integrated into one unit. The above integrated units can be implemented in the form of hardware or software functional units.

If the integrated unit is implemented in the form of a software functional unit and sold or used as an independent product, the integrated unit may be stored in a processor-readable storage medium. Based on this understanding, an essential part, or a part contributing to the prior art, or all or part, of the technical solutions of the present disclosure can be embodied in the form of a software product, and the computer software product is stored in a storage medium including several instructions to cause a computer device (which may be a personal computer, a server, or a second communication device, etc.) or a processor to execute all or part of the steps of the methods described in various embodiments of the present disclosure. The aforementioned storage media include: U disk, mobile hard disk, Read-Only Memory (ROM), Random Access Memory (RAM), magnetic disk or optical disk and other media that can store program codes.

Embodiments of the present disclosure also provide a processor-readable storage medium. The processor-readable storage medium stores a computer program. The computer program is configured to cause the processor to execute the information processing method provided by the embodiments of the present disclosure.

The processor-readable storage medium may be any available media or data storage device that the processor can access, including but not limited to magnetic storage (such as floppy disks, hard disks, tapes, magneto-optical disks (MO), etc.), optical storage (such as Compact Disk (CD), Digital Versatile Disc (DVD), Blu-ray Disc (BD), High-Definition Versatile Disc (HVD), etc.), and semiconductor memory (such as Read-Only Memory (ROM), Erasable Programmable ROM (EPROM), Electrically EPROM (EEPROM), non-volatile memory (NAND FLASH), solid state drive (SSD)), etc.

Those skilled in the art will understand that embodiments of the present disclosure may be provided as methods, systems, or computer program products. Accordingly, the present disclosure may take the form of an entirely hardware embodiment, an entirely software embodiment, or an embodiment that combines software and hardware aspects. Furthermore, the present disclosure may take the form of a computer program product implemented on one or more computer-usable storage media (including, but not limited to, magnetic disk storage and optical storage, etc.) embodying computer-usable program code therein.

The present disclosure is described with reference to flowchart illustrations and/or block diagrams of methods, apparatus (systems), and computer program products according to embodiments of the present disclosure. It will be understood that each process and/or block in the flowchart illustrations and/or block diagrams, and combinations of processes and/or blocks in the flowchart illustrations and/or block diagrams, can be implemented by computer-executable instructions. These computer-executable instructions may be provided to a processor of a general-purpose computer, special-purpose computer, embedded processor, or other programmable data processing device to produce a machine such that the instructions executed by the processor of the computer or other programmable data processing device produce a means for implementing the functions specified in a process or processes in a flowchart in the flowchart illustrations and/or a block or blocks in a block diagram.

These processor-executable instructions may also be stored in a processor-readable memory that causes a computer or other programmable data processing apparatus to operate in a particular manner, such that the generation of instructions stored in the processor-readable memory includes the manufacture of the instruction means product, the instruction means implements the function specified in one process or multiple processes in the flowchart and/or one or more blocks in the block diagram.

These processor-executable instructions may also be loaded onto a computer or other programmable data processing device, causing a series of operational steps to be performed on the computer or other programmable device to produce computer-implemented processing, thereby causing the computer or other programmable device to execute the instructions and provide steps for implementing the functions specified in a process or processes of the flowchart diagrams and/or a block or blocks of the block diagrams.

It should be noted that the division of the above modules should be understood as merely a logical functional division. In actual implementation, they can be fully or partially integrated into a single physical entity, or physically separated. Moreover, these modules can all be implemented in the form of software invoked by processing elements; they can all be implemented in the form of hardware; or some modules can be implemented in the form of software invoked by processing elements, while others are implemented in the form of hardware. For example, a certain module can be a separately established processing element, or integrated into a chip of the above-mentioned device for implementation. In addition, it can also be stored in the memory of the above-mentioned device in the form of program code, and the functions of the above-determined modules can be invoked and executed by a certain processing element of the above-mentioned device. The implementation of other modules is similar. Furthermore, all or part of these modules can be integrated together or implemented independently. The processing element mentioned here can be an integrated circuit with signal processing capabilities. In the implementation process, each step of the above method or each of the above modules can be completed through hardware-integrated logic circuits in the processor element or instructions in the form of software.

For example, each module, unit, sub-unit, or sub-module can be one or more integrated circuits configured to implement the above method, such as: one or more Application Specific Integrated Circuits (ASICs), or one or more digital signal processors (DSPs), or one or more Field Programmable Gate Arrays (FPGAs), etc. Another example: when a certain module mentioned above is implemented in the form of processing element scheduling program codes, the processing element can be a general-purpose processor, such as a Central Processing Unit (CPU) or other processors that can onvoke program codes. Yet another example: these modules can be integrated together and implemented in the form of a System-On-a-Chip (SOC).

The terms "first", "second", etc. in the specification and claims of the present disclosure are used to distinguish similar objects, and are not necessarily used to describe a specific order or sequence. It should be understood that such used data can be interchanged under appropriate circumstances to facilitate the embodiments of the present disclosure described herein, for example, to be implemented in an order other than those illustrated or described herein. In addition, the terms "comprise" and "have" and any variations thereof are intended to cover non-exclusive inclusions. For example, a process, method, system, product, or device that includes a series of steps or units is not necessarily limited to those steps or units clearly listed, but may include other steps or units not clearly listed or inherent to such processes, methods, products, or devices. In addition, the use of "and/or" in the specification and claims indicates at least one of the connected objects. For example, A and/or B and/or C includes 7 cases: A alone, B alone, C alone, both A and B, both B and C, both A and C, and all of A, B, and C. Similarly, the use of "at least one of A and B" in this specification and claims should be understood as "either A alone, B alone, or both A and B".

Obviously, those skilled in the art can make various changes and modifications to the present disclosure without departing from the spirit and scope of the present disclosure. In this way, if these changes and modifications of the present disclosure fall within the protection scope of the claims of the present disclosure and equivalent technologies, the present disclosure is also intended to include these changes and modifications.

## Claims

1. An information processing method performed by a first communication device, comprising:
receiving a first signaling transmitted from a second communication device;
transmitting monitoring assistant information for a first object based on the first signaling;
wherein, the first object comprises one or more of following:
a model;
a Channel state information (CSI) determination method;
a CSI feedback method;
a positioning method;
a beam management method.

2. The method according to claim 1, wherein the first signaling comprises one or more of following indication information:
information instructing the first communication device to transmit or determine the monitoring assistant information for the first object;
information indicating an identifier ID related to the first object;
information indicating a reference signal resource corresponding to the monitoring assistant information for the first object;
information indicating time corresponding to the monitoring assistant information for the first object;
information instructing the first communication device to determine a time domain resource of the monitoring assistant information for the first object;
information instructing the first communication device to determine time-frequency resources of the monitoring assistant information for the first object;
information instructing the first communication device to determine a period of the monitoring assistant information for the first object;
information indicating a transmission occasion in which the first communication device transmits the monitoring assistant information for the first object;
information instructing a time domain resource used by the first communication device to transmit the monitoring assistant information for the first object;
information indicating a period in which the first communication device transmits the monitoring assistant information for the first object;
information indicating a transmission position and/or a channel corresponding to the monitoring assistant information for the first object;
information instructing the first communication device to transmit a CSI report corresponding to the monitoring assistant information for the first object;
information instructing the first communication device to transmit CSI used for monitoring the first object;
information indicating CSI-report related information;
information indicating a determination method and/or a feedback method of CSI used for monitoring the first object;
information indicating content and/or format comprised in the monitoring assistant information for the first object;
information indicating an activated model.

3. The method according to claim 2, wherein the information related to the CSI report comprises one or more of following:
content comprised in the CSI report;
a format of the CSI report;
a feedback method of the CSI comprised in the CSI report.

4. The method according to claim 2, wherein the information indicating the ID comprises one or more of the following:
a model ID;
a functionality ID;
a scenario type;
wherein the functionality ID is configured to indicate an ID of one or more of following functionalities:
CSI compression feedback;
CSI prediction;
positioning;
beam management;
resource scheduling.

5. The method according to claim 2, wherein information of the time comprises one or more of following:
time information of determining the monitoring assistant information for the first object;
time information of monitoring the reference signal corresponding to the monitoring assistant information for the first object.

6. The method according to claim 5, wherein the information of the time comprises one or more of following:
starting time of the monitoring assistant information for the first object;
ending time of the monitoring assistant information for the first object;
a duration of the monitoring assistant information for the first object;
effective time of the first signaling.

7. The method according to claim 1 or 2, wherein the monitoring assistant information comprises one or more of following:
identifier (ID) information;
channel state information (CSI);
one or more measurement metrics;
information used to indicate a first performance metric.

8. The method according to claim 7, wherein the ID information comprises one or more of the following:
a model ID;
a functionality ID;
a scenario type.

9. The method according to claim 7, wherein the CSI comprises one or more of following:
CSI corresponding to at least one model;
non-model-based CSI;
precoding matrix information;
rank information;
channel quality indicator (CQI).

10. The method according to claim 7, wherein the first performance metric comprises one or more of following:
a performance metric corresponding to the first object;
an accuracy index;
a system performance metric;
an index corresponding to distribution;
a performance metric of layer 1 or layer 3.

11. The method according to claim 7, wherein the one or more measurement metrics comprise one or more of following:
position-related information;
information related to one or more time measurement metrics;
one or more angle measurement metrics
one or more beam measurement metrics;
one or more beam quality measurement metrics;
one or more channel quality measurement metrics.

12. The method according to claim 1, wherein the CSI feedback method comprises one or more of following:
a model-based CSI feedback method, and a codebook-based CSI feedback method; and/or,
the CSI determination method comprises one or more of following:
a model-based CSI determination method, and a codebook-based CSI determination method.

13. The method according to claim 12, wherein the CSI determination method is used for one or more of following:
CSI compression, and
CSI prediction.

14. The method according to claim 2, wherein the CSI report comprises the monitoring assistant information for the first object;
the CSI report is a CSI report used for monitoring the first object; and/or, the CSI report comprises an information field configured to indicate the monitoring assistant information for the first object.

15. The method according to claim 2, wherein transmitting the monitoring assistant information for the first object based on the first signaling comprises any of following:
transmitting the monitoring assistant information for the first object in response to the first signaling;
determining the monitoring assistant information for the first object based on the first signaling, and transmitting the determined monitoring assistant information for the first object;
determining a transmitting method of the monitoring assistant information for the first object based on the first signaling, and transmitting the monitoring assistant information for the first object based on the transmitting method.

16. The method according to claim 7, wherein the monitoring assistant information comprises the CSI, the first signaling comprises information indicating a feedback method of the CSI, wherein transmitting the monitoring assistant information for the first object based on the first signaling comprises transmitting the CSI based on the feedback method of the CSI indicated by the first signaling.

17. The method according to claim 7, wherein the monitoring assistant information comprises the CSI, the CSI comprises a first CSI obtained based on a model, and the first CSI comprises one or more CSIs.

18. The method according to claim 17, wherein one or more of following is comprised in the method:
each CSI of the one or more CSIs comprised in the first CSI corresponds to a model, or any two CSIs of the one or more CSIs comprised in the first CSI are CSIs obtained based on different models;
the one or more CSIs comprised in the first CSI correspond to the same channel;
the one or more CSIs comprised in the first CSI correspond to the same reference signal;
the one or more CSIs comprised in the first CSI correspond to the same reference signal resource;
the one or more CSIs comprised in the first CSI are not transmitted at a same time, or the one or more CSIs comprised in the first CSI are transmitted at a same time;
the one or more CSIs comprised in the first CSI are transmitted in same uplink control information UCI, or the one or more CSIs comprised in the first CSI are transmitted in multiple UCIs;
the one or more CSIs comprised in the first CSI are transmitted on a same channel, or the one or more CSIs comprised in the first CSI are transmitted on multiple channels.

19. The method according to claim 7, wherein the monitoring assistant information comprises the CSI, and transmitting the monitoring assistant information for the first object based on the first signaling comprises any of following:
determining, based on the first signaling, the transmitting time of the CSI for monitoring the first object, and transmitting the CSI at the transmitting time;
determining a period of monitoring the first object based on the first signaling, and transmitting the CSI according to the period.

20. The method according to claim 1, wherein the first communication device comprises a terminal, and the second communication device comprises a base station or a third communication device; or,
the first communication device comprises a base station, and the second communication device comprises a third communication device or terminal; wherein, the third communication device is a device different from the base station and the terminal.

21. An information processing method performed by a second communication device, comprising:
transmitting a first signaling to the first communication device;
receiving monitoring assistant information for the first object from the first communication device;
wherein the first object comprises one or more of following:
a model;
a Channel state information (CSI) determination method;
a CSI feedback method;
a positioning method;
a beam management method.

22. The method according to claim 21, further comprising:
monitoring the first object based on the monitoring assistant information.

23. The method according to claim 22, wherein monitoring the first object based on the monitoring assistant information comprises:
evaluating performance of the first object based on the monitoring assistant information.

24. The method according to claim 21, wherein the first signaling comprises one or more of following indication information:
information instructing the first communication device to transmit or determine the monitoring assistant information for the first object;
information indicating an identifier ID related to the first object;
information indicating a reference signal resource corresponding to the monitoring assistant information for the first object;
information indicating time corresponding to the monitoring assistant information for the first object;
information instructing the first communication device to determine a time domain resource of the monitoring assistant information for the first object;
information instructing the first communication device to determine time-frequency resources of the monitoring assistant information for the first object;
information instructing the first communication device to determine a period of the monitoring assistant information for the first object;
information indicating a transmission occasion in which the first communication device transmits the monitoring assistant information for the first object;
information instructing a time domain resource used by the first communication device to transmit the monitoring assistant information for the first object;
information indicating a period in which the first communication device transmits the monitoring assistant information for the first object;
information indicating a transmission position and/or a channel corresponding to the monitoring assistant information for the first object;
information instructing the first communication device to transmit a CSI report corresponding to the monitoring assistant information for the first object;
information instructing the first communication device to transmit the CSI used for monitoring the first object;
information indicating CSI-report related information;
information indicating a determination method and/or a feedback method of CSI used for monitoring the first object;
information indicating content and/or format comprised in the monitoring assistant information for the first object;
information indicating an activated model.

25. The method according to claim 24, wherein the information related to the CSI report comprises one or more of following:
content comprised in the CSI report;
a format of the CSI report;
a feedback method of the CSI comprised in the CSI report.

26. The method according to claim 24, wherein the information indicating the ID comprises one or more of the following:
a model ID;
a functionality ID;
a scenario type;
wherein the functionality ID is configured to indicate an ID of one or more of following functionalities:
CSI compression feedback;
CSI prediction;
positioning;
beam management;
resource scheduling.

27. The method according to claim 24, wherein information of the time comprises one or more of following:
time information of determining the monitoring assistant information for the first object;
time information of monitoring a reference signal corresponding to the monitoring assistant information for the first object.

28. The method according to claim 27, wherein the information of the time further comprises one or more of following:
starting time of the monitoring assistant information for the first object;
ending time of the monitoring assistant information for the first object;
a duration of the monitoring assistant information for the first object;
effective time of the first signaling.

29. The method according to claim 21 or 24, wherein the monitoring assistant information comprises one or more of following:
identifier (ID) information;
channel state information (CSI);
one or more measurement metrics;
information used to indicate a first performance metric.

30. The method according to claim 29, wherein the ID information comprises one or more of the following:
a model ID;
a functionality ID;
a scenario type.

31. The method according to claim 29, wherein the CSI comprises one or more of following:
CSI corresponding to at least one model;
non-model-based CSI;
precoding matrix information;
rank information;
channel quality indicator (CQI).

32. The method according to claim 29, wherein the first performance metric comprises one or more of following:
a performance metric corresponding to the first object;
an accuracy index;
a system performance metric;
an index corresponding to distribution;
a performance metric of layer 1 or layer 3.

33. The method according to claim 29, wherein the one or more measurement metrics comprise one or more of following:
position-related information;
information related to one or more time measurement metrics;
one or more angle measurement metrics
one or more beam measurement metrics;
one or more beam quality measurement metrics;
one or more channel quality measurement metrics.

34. The method according to claim 21, wherein the CSI feedback method comprises one or more of following:
a model-based CSI feedback method, and a codebook-based CSI feedback method; and/or,
the CSI determination method comprises one or more of following:
a model-based CSI determination method, and a codebook-based CSI determination method.

35. The method according to claim 34, wherein the CSI determination method is used for one or more of following:
CSI compression, and
CSI prediction.

36. The method according to claim 24, wherein the CSI report comprises the monitoring assistant information for the first object;
the CSI report is a CSI report used for monitoring the first object; and/or, the CSI report comprises an information field configured to indicate the monitoring assistant information for the first object.

37. The method according to claim 29, wherein the monitoring assistant information comprises the CSI, the first signaling comprises information indicating a feedback method of the CSI, wherein receiving the monitoring assistant information for the first object from the first communication device comprises receiving the CSI transmitted from the first communication device based on the feedback method of the CSI indicated by the first signaling.

38. The method according to claim 29, wherein the monitoring assistant information comprises the CSI, the CSI comprises a first CSI obtained based on a model, and the first CSI comprises one or more CSIs.

39. The method according to claim 38, wherein one or more of the following is comprised in the method:
each CSI of the one or more CSIs comprised in the first CSI corresponds to a model, or any two CSIs of the one or more CSIs comprised in the first CSI are CSIs obtained based on different models;
the one or more CSIs comprised in the first CSI correspond to the same channel;
the one or more CSIs comprised in the first CSI correspond to the same reference signal;
the one or more CSIs comprised in the first CSI correspond to the same reference signal resource;
the one or more CSIs comprised in the first CSI are not received at a same time, or the one or more CSIs comprised in the first CSI are received at a same time;
the one or more CSIs comprised in the first CSI are received in same uplink control information UCI, or the one or more CSIs comprised in the first CSI are received in multiple UCIs;
the one or more CSIs comprised in the first CSI are received on a same channel, or the one or more CSIs comprised in the first CSI are received on multiple channels.

40. The method according to claim 29, wherein the monitoring assistant information comprises the CSI, and receiving the monitoring assistant information for the first object from the first communication device comprises:
periodically receiving the CSI.

41. The method according to claim 21, wherein the first communication device comprises a terminal, and the second communication device comprises a base station or a third communication device; or,
the first communication device comprises a base station, and the second communication device comprises a third communication device or terminal; wherein, the third communication device is a device different from the base station and the terminal.

42. A first communication device, comprising:
a memory, a transceiver and a processor, wherein: the memory is configured to store a computer program; the transceiver is configured to transmit and receive data under the control of the processor; the processor is configured to read the computer program in the memory and perform following operations:
receiving a first signaling transmitted from a second communication device;
transmitting monitoring assistant information for a first object based on the first signaling;
wherein, the first object comprises one or more of following:
a model;
a Channel state information (CSI) determination method;
a CSI feedback method;
a positioning method;
a beam management method.

43. The device according to claim 42, wherein the first signaling comprises one or more of following indication information:
information instructing the first communication device to transmit or determine the monitoring assistant information for the first object;
information indicating an identifier ID related to the first object;
information indicating a reference signal resource corresponding to the monitoring assistant information for the first object;
information indicating time corresponding to the monitoring assistant information for the first object;
information instructing the first communication device to determine a time domain resource of the monitoring assistant information for the first object;
information instructing the first communication device to determine time-frequency resources of the monitoring assistant information for the first object;
information instructing the first communication device to determine a period of the monitoring assistant information for the first object;
information indicating a transmission occasion in which the first communication device transmits the monitoring assistant information for the first object;
information instructing a time domain resource used by the first communication device to transmit the monitoring assistant information for the first object;
information indicating a period in which the first communication device transmits the monitoring assistant information for the first object;
information indicating a transmission position and/or a channel corresponding to the monitoring assistant information for the first object;
information instructing the first communication device to transmit a CSI report corresponding to the monitoring assistant information for the first object;
information instructing the first communication device to transmit CSI used for monitoring the first object;
information indicating CSI-report related information;
information indicating a determination method and/or a feedback method of CSI used for monitoring the first object;
information indicating content and/or format comprised in the monitoring assistant information for the first object;
information indicating an activated model.

44. The device according to claim 43, wherein the information related to the CSI report comprises one or more of following:
content comprised in the CSI report;
a format of the CSI report;
a feedback method of the CSI comprised in the CSI report.

45. The device according to claim 43, wherein the information indicating the ID comprises one or more of the following:
a model ID;
a functionality ID;
a scenario type;
wherein the functionality ID is configured to indicate an ID of one or more of following functionalities:
CSI compression feedback;
CSI prediction;
positioning;
beam management;
resource scheduling.

46. The device according to claim 43, wherein information of the time comprises one or more of following:
time information of determining the monitoring assistant information for the first object;
time information of monitoring the reference signal corresponding to the monitoring assistant information for the first object.

47. The device according to claim 46, wherein the information of the time comprises one or more of following:
starting time of the monitoring assistant information for the first object;
ending time of the monitoring assistant information for the first object;
a duration of the monitoring assistant information for the first object;
effective time of the first signaling.

48. The device according to claim 42 or 43, wherein the monitoring assistant information comprises one or more of following:
identifier (ID) information;
channel state information (CSI);
one or more measurement metrics;
information used to indicate a first performance metric.

49. The device according to claim 48, wherein the ID information comprises one or more of the following:
a model ID;
a functionality ID;
a scenario type.

50. The device according to claim 48, wherein the CSI comprises one or more of following:
CSI corresponding to at least one model;
non-model-based CSI;
precoding matrix information;
rank information;
channel quality indicator (CQI).

51. The device according to claim 48, wherein the first performance metric comprises one or more of following:
a performance metric corresponding to the first object;
an accuracy index;
a system performance metric;
an index corresponding to distribution;
a performance metric of layer 1 or layer 3.

52. The device according to claim 48, wherein the one or more measurement metrics comprise one or more of following:
position-related information;
information related to one or more time measurement metrics;
one or more angle measurement metrics
one or more beam measurement metrics;
one or more beam quality measurement metrics;
one or more channel quality measurement metrics.

53. The device according to claim 42, wherein the CSI feedback method comprises one or more of following:
a model-based CSI feedback method, and a codebook-based CSI feedback method; and/or,
the CSI determination method comprises one or more of following:
a model-based CSI determination method, and a codebook-based CSI determination method.

54. A second communication device, comprising:
a memory, a transceiver and a processor, wherein: the memory is configured to store a computer program; the transceiver is configured to transmit and receive data under the control of the processor; the processor is configured to read the computer program in the memory and perform following operations:
transmitting a first signaling to the first communication device;
receive monitoring assistant information for the first object from the first communication device;
wherein the first object comprises one or more of following:
a model;
a Channel state information (CSI) determination method;
a CSI feedback method;
a positioning method;
a beam management method.

55. The device according to claim 54, where the processor is configured to read the computer program in the memory and further perform a following operation:
monitoring the first object based on the monitoring assistant information.

56. The device according to claim 55, wherein monitoring the first object based on the monitoring assistant information comprises:
evaluating performance of the first object based on the monitoring assistant information.

57. The device according to claim 54, wherein the first signaling comprises one or more of following indication information:
information instructing the first communication device to transmit or determine the monitoring assistant information for the first object;
information indicating an identifier ID related to the first object;
information indicating a reference signal resource corresponding to the monitoring assistant information for the first object;
information indicating time corresponding to the monitoring assistant information for the first object;
information instructing the first communication device to determine a time domain resource of the monitoring assistant information for the first object;
information instructing the first communication device to determine time-frequency resources of the monitoring assistant information for the first object;
information instructing the first communication device to determine a period of the monitoring assistant information for the first object;
information indicating a transmission occasion in which the first communication device transmits the monitoring assistant information for the first object;
information instructing a time domain resource used by the first communication device to transmit the monitoring assistant information for the first object;
information indicating a period in which the first communication device transmits the monitoring assistant information for the first object;
information indicating a transmission position and/or a channel corresponding to the monitoring assistant information for the first object;
information instructing the first communication device to transmit a CSI report corresponding to the monitoring assistant information for the first object;
information instructing the first communication device to transmit the CSI used for monitoring the first object;
information indicating CSI-report related information;
information indicating a determination method and/or a feedback method of CSI used for monitoring the first object;
information indicating content and/or format comprised in the monitoring assistant information for the first object;
information indicating an activated model.

58. The device according to claim 57, wherein the information related to the CSI report comprises one or more of following:
content comprised in the CSI report;
a format of the CSI report;
a feedback method of the CSI comprised in the CSI report.

59. The device according to claim 57, wherein the information indicating the ID comprises one or more of the following:
a model ID;
a functionality ID;
a scenario type;
wherein the functionality ID is configured to indicate an ID of one or more of following functionalities:
CSI compression feedback;
CSI prediction;
positioning;
beam management;
resource scheduling.

60. A first communication device, comprising:
a first receiving unit configured to receive a first signaling transmitted from a second communication device;
a first transmitting unit configured to transmit monitoring assistant information for a first object based on the first signaling;
wherein, the first object comprises one or more of following:
a model;
a Channel state information (CSI) determination method;
a CSI feedback method;
a positioning method;
a beam management method.

61. A second communication device, comprising:
a first transmitting unit configured to transmit a first signaling to the first communication device;
a first receiving unit configured to receive monitoring assistant information for the first object from the first communication device;
wherein the first object comprises one or more of following:
a model;
a Channel state information (CSI) determination method;
a CSI feedback method;
a positioning method;
a beam management method.

62. A processor-readable storage medium, wherein the processor-readable storage medium stores a computer program, and the computer program is configured to cause a processor to execute the information processing method according to any one of claims 1-20, or the computer program is configured to cause a processor to execute the information processing method according to any one of claims 21-41.
